# EUROPEAN PATENT APPLICATION

(11) **EP 4 383 593 A1**
(43) Date of publication of application: **12.06.2024**
(21) Application number: 22860647.1
(22) Date of filing: 26.08.2022
(51) Int. Cl.: H04B 14/00

(54) **COMMUNICATION METHOD AND COMMUNICATION APPARATUS**

(30) Priority: 27.08.2021 CN 202110996978
(71) Applicant: Huawei Technologies Co., Ltd., Shenzhen, Guangdong 518129 (CN)
(72) Inventor: LIU, Yunfeng, Shenzhen, Guangdong 518129 (CN); GUO, Zhiheng, Shenzhen, Guangdong 518129 (CN); MA, Ruixiang, Shenzhen, Guangdong 518129 (CN); XIE, Xinqian, Shenzhen, Guangdong 518129 (CN); SONG, Xinghua, Shenzhen, Guangdong 518129 (CN)
(74) Representative: Goddar, Heinz J.
(86) International application number: PCT/CN2022/115224
(87) International publication number: WO 2023/025301

(57) **Abstract**

This application discloses a communication method and a communication apparatus. The method includes: A terminal device receives first indication information from a network device, where the first indication information indicates a first time interval. The first time interval is an interval between an end time point of a first signal and a start time point of a second signal. The terminal device receives or sends the second signal at least after the first time interval elapses after the first signal. The first signal and the second signal are sent in a same BWP. A first filter parameter corresponding to the first signal is different from a second filter parameter corresponding to the second signal. The first time interval is related to switching duration of the terminal device. The network device determines the first time interval based on the switching duration of the terminal device when a filter parameter is switched, to ensure that duration between the first signal and the second signal is sufficient for the terminal device to adapt to a new filter parameter. This can reduce a probability that the second signal cannot be correctly received.

## Description

### CROSS-REFERENCE TO RELATED APPLICATIONS

This application claims priority to Chinese Patent Application No. 202110996978.8, filed with the China National Intellectual Property Administration on August 27, 2021 and entitled "COMMUNICATION METHOD AND COMMUNICATION APPARATUS", which is incorporated herein by reference in its entirety.

### TECHNICAL FIELD

This application relates to the field of interference technologies, and in particular, to a communication method and a communication apparatus in a subband full duplex (subband full duplex, SBFD) system.

### BACKGROUND

Communication between a terminal device and a network device may involve switching of a filter parameter. For example, after receiving a first signal from the network device, the terminal device further sends a second signal to the network device. A first filter parameter used by the terminal device to receive the first signal is different from a second filter parameter used by the terminal device to send the second signal. Before sending the second signal, the terminal device needs to switch from the first filter parameter to the second filter parameter. However, specific duration is needed from switching from the first filter parameter to the second filter parameter by the terminal device to using the second filter parameter by the terminal device. If a time interval between the first signal and the second signal is short, the terminal device may fail to complete processing of the first signal, preparation of the second signal, and adaptation to the second filter parameter in a timely manner. Consequently, the terminal device sends the second signal by using the first filter parameter. This causes a failure to correctly receive the second signal by the network device or strong interference from the second signal to another signal.

### SUMMARY

This application provides a communication method and a communication apparatus, to enable a terminal device to complete switching of a filter parameter before sending or receiving a signal, to reduce, as much as possible, a probability that the signal cannot be correctly received, and reduce or avoid interference between signals as much as possible.

According to a first aspect, a communication method is provided, and may be performed by a first communication apparatus. The first communication apparatus may be a communication device or a communication apparatus, for example, a chip system, that can support the communication device to implement a function needed in the method. The following provides descriptions by using an example in which the communication device is a terminal device. The method includes:

The terminal device receives first indication information from a network device, where the first indication information indicates a first time interval. The first time interval is an interval between an end time point of a first signal and a start time point of a second signal. The terminal device receives or sends the second signal at least after the first time interval elapses after the first signal. The first signal and the second signal are sent in a same bandwidth part (bandwidth part, BWP). A first filter parameter corresponding to the first signal is different from a second filter parameter corresponding to the second signal. The first time interval is related to switching duration of the terminal device, and the switching duration is duration needed for a filter of the terminal device to switch from the first filter parameter to the second filter parameter and for the terminal device to adapt to the second filter parameter. In this solution, considering that a filter parameter of the terminal device may be switched, the network device determines the first time interval based on the switching duration of the terminal device when the filter parameter is switched, to ensure that duration between the first signal and the second signal is sufficient for the terminal device to adapt to a new filter parameter. This can reduce interference from a to-be-sent signal, for example, the second signal, to another signal, reduce interference to the received second signal, or lower a probability that the second signal cannot be correctly received.

In a possible implementation, that the first time interval is related to switching duration of the terminal device includes:

The first time interval is greater than or equal to the switching duration T, or the first time interval is greater than or equal to a sum T' of the switching duration and first duration. In this solution, the first time interval varies with the first signal and the second signal, to reduce a signal transmission delay as much as possible.

The first time interval varies with the first signal, the second signal, and transmission directions of the first signal and the second signal.

For example, the terminal device receives the second signal at least after the first time interval elapses after receiving the first signal. In this case, the first time interval is greater than or equal to T', and the first duration may be processing duration T1 of the first signal. For example, the network device sends the first signal and the second signal to the terminal device, and the first signal may indicate a time domain position of the second signal. As a result, the terminal device can learn of the time domain position of the second signal only after receiving the first signal and completing demodulation of the first signal, to receive the second signal. Therefore, the first time interval should be greater than or equal to a sum of the processing duration T1 of the first signal and the switching duration T, to ensure that the terminal device has completed the switching of the filter parameter before receiving the second signal.

For example, the terminal device sends the second signal after the first time interval elapses after receiving the first signal. In this case, the first time interval should be greater than or equal to T', and the first duration is processing duration T1 of the first signal and preparation duration T2 of the second signal. It may be understood that the terminal device needs to make a preparation before sending the second signal. Therefore, the first time interval should be greater than or equal to a sum of the processing duration T1 of the first signal, the preparation duration T2 of the second signal, and the switching duration T, to ensure that the terminal device has completed the switching of the filter parameter before sending the second signal.

For example, the terminal device sends the second signal after the first time interval elapses after sending the first signal. In this case, because the terminal device sends the signal, it only needs to be ensured that the switching of the filter parameter can be completed before the signal is sent. To be specific, the first time interval should be greater than or equal to the switching duration T. In other words, the first time interval is greater than or equal to T', and the first duration is greater than or equal to 0. For example, the first signal may be hybrid automatic repeat request-acknowledgment (hybrid automatic repeat request-acknowledgement, HARQ-ACK) information of another signal, and the information is carried on a PUCCH. The second signal may be a semi-persistent report (Semi-persistent report) carried on a PUCCH, and the report includes a measurement result of a semi-persistent channel state information reference signal (Semi-persistent Channel state information reference signal, CSI-RS). The second signal is triggered by another signal received by the terminal device, in other words, the another signal includes information indicating to send the second signal. For example, the terminal device may receive a third signal and a fourth signal, where the first signal is a HARQ-ACK signal of the fourth signal, and the fourth signal includes information indicating to send the second signal. The third signal may further indicate time domain positions of the fourth signal and the first signal. Therefore, the terminal device has learned of the time domain position of the first signal after demodulating the third signal. The terminal device may obtain a time domain position of the second signal after demodulating the fourth signal. Preparation duration of the second signal starts after the demodulation of the fourth signal, and data preparation may be completed before the first signal is received. Therefore, the first time interval should be greater than or equal to the switching duration T. For example, the first time interval is greater than or equal to the sum of the switching duration T and the first duration. The first duration may be duration that is predefined, preconfigured, or configured by the network device, to meet a switching requirement of the terminal device.

For example, the terminal device receives the second signal after the first time interval elapses after receiving the first signal. In this case, if the second signal is a repetition of the first signal, time domain positions of the first signal and the second signal may be indicated by another signal received by the terminal device. Because the time domain position of the second signal can be learned of without reprocessing the first signal, the first time interval only needs to be greater than or equal to the switching duration T.

Similarly, the terminal device sends the second signal after the first time interval elapses after sending the first signal. In this case, if the second signal is a repetition of the first signal, the first time interval should be greater than or equal to the switching duration T.

In a possible implementation, the first indication information is carried in the first signal. In other words, the first signal may include the first indication information, or may indicate the first time interval indicated by the first indication information.

According to a second aspect, a communication method is provided, and may be performed by a first communication apparatus. The first communication apparatus may be a communication device or a communication apparatus, for example, a chip system, that can support the communication device to implement a function needed in the method. The following provides descriptions by using an example in which the communication device is a terminal device. The method includes:

The terminal device determines a first bandwidth of a filter, and filters a signal on a first time-frequency resource through the filter. The first time-frequency resource belongs to a second time-frequency resource. A time domain resource corresponding to the first time-frequency resource is the same as a time domain resource corresponding to the second time-frequency resource, a frequency domain resource corresponding to the second time-frequency resource includes at least two subbands, and transmission directions of the at least two subbands include an uplink transmission direction and a downlink transmission direction. A frequency domain resource corresponding to the first time-frequency resource is one subband (for example, referred to as a first subband) in the at least two subbands. The first bandwidth is greater than or equal to a bandwidth occupied by the first subband in a BWP, and is less than an active BWP of the terminal device or a component carrier (component carrier, CC). In this solution, the transmission directions of the at least two subbands include the uplink transmission direction and the downlink transmission direction, to be specific, CLI between terminal devices may exist. To reduce the CLI between terminal devices, the first time-frequency resource may be filtered through the filter with the first bandwidth. When the frequency domain resource corresponding to the first time-frequency resource is the first subband, correspondingly, the first bandwidth is less than the active BWP of the terminal device or the CC. For example, the first bandwidth is the first subband. This can reduce or avoid, as much as possible, leakage that is of a signal sent by the terminal device on the first time-frequency resource and that is to another subband adjacent to the first subband, to reduce the CLI between terminal devices. Similarly, the terminal device filters, through the filter with the first bandwidth, a signal received on the first time-frequency resource, to avoid or reduce, as much as possible, a CLI signal received by the terminal device, so that power of a signal received by a receiver of the terminal device is not additionally increased due to the CLI. This reduces a blocking probability of the receiver of the terminal device.

In a possible implementation, the first bandwidth is a minimum filter bandwidth that is in a filter bandwidth supported by the terminal device and that is greater than or equal to the bandwidth occupied by the first subband in the BWP, to reduce, as much as possible, interference caused by leakage of the signal on the first time-frequency resource to another subband or the blocking probability of the receiver of the terminal device.

In an alternative solution, the first bandwidth may be a minimum filter bandwidth greater than or equal to a third bandwidth, where the third bandwidth is a bandwidth occupied by a channel carrying the signal on the first time-frequency resource, to reduce, to a large extent, interference caused by leakage of the signal on the first time-frequency resource to another subband. Alternatively, the third bandwidth is a bandwidth occupied by the first subband in the CC, to reduce, to a large extent, a quantity of times of switching a center frequency and/or a bandwidth by the filter. This reduces complexity of the terminal device, and reduces interference caused by leakage of the signal on the first time-frequency resource to another subband, namely, interference from the signal on the first time-frequency resource to information in another subband.

In a possible implementation, that the first bandwidth is a minimum filter bandwidth that is in a filter bandwidth supported by the terminal device and that is greater than or equal to the bandwidth occupied by the first subband in the BWP includes: The first bandwidth is a minimum filter bandwidth that is in the filter bandwidth supported by the terminal device in at least one bandwidth and that is greater than or equal to the bandwidth occupied by the first subband in the BWP. The at least one bandwidth is indicated by a network device. In this solution, the network device may provide a referable bandwidth, for example, the at least one bandwidth, for the terminal device based on a capability of the terminal device. The terminal device determines the first bandwidth within a range of the at least one bandwidth, to reduce switching duration T of the terminal device, and therefore reduce a signal sending delay of the terminal device.

In a possible implementation, the determining a first bandwidth of a filter includes: The terminal device receives third indication information from the network device, and determines the first bandwidth based on the third indication information. The third indication information indicates the first bandwidth. In this solution, the network device may determine the first bandwidth of the filter of the terminal device, and notify the terminal device of the first bandwidth. The first bandwidth does not need to be determined by the terminal device, so that processing complexity of the terminal device can be reduced.

In a possible implementation, the center frequency of the filter is a center position of the bandwidth occupied by the first subband in the BWP, or is a center position of the active BWP of the terminal device. Alternatively, the at least two subbands include the first subband and a second subband, and the center frequency of the filter is a frequency domain position at which the first subband is adjacent to the second subband. This solution provides two determining manners of determining the center frequency of the filter, and the terminal device may determine a specific to-be-used determining manner based on an actual scenario. For example, the to-be-used determining manner may be determined based on a requirement for reducing the leakage of the signal on the first time-frequency resource to the another subband or a requirement for reducing the quantity of times of switching the center frequency and/or the bandwidth by the filter. This is more flexible.

In a possible implementation, the determining a first bandwidth of a filter includes: The terminal device receives second indication information from the network device, and determines the first bandwidth. The second indication information indicates a first filtering mode in a plurality of filtering modes. It may be understood that a bandwidth of an existing filter is greater than or equal to the BWP or the CC. In embodiments of this application, the first bandwidth is less than the BWP or the CC. It may be considered that, in embodiments of this application, a new filtering mode is actually provided based on an existing filtering mode. The terminal device may filter the first time-frequency resource in the existing filtering mode or the new filtering mode. In this solution, the first filtering mode may be considered as the new filtering mode, and the network device triggers, by using the second indication information, the terminal device to determine the first bandwidth. If the terminal device is not triggered by the network device, the terminal device uses the existing filtering mode by default, and does not need to determine the bandwidth of the filter again. In other words, the terminal device skips an unnecessary determining operation, to reduce power consumption of the terminal device.

In a possible implementation, the determining a first bandwidth of a filter includes: The terminal device determines a first filtering mode based on configuration information from the network device. The configuration information includes a time division duplexing configuration configured by the network device for the terminal device, and the time division duplexing configuration corresponds to the first filtering mode. The first filtering mode is for triggering the terminal device to determine the first bandwidth. In this solution, the filtering mode of the terminal device may be implicitly indicated by the time division duplexing configuration configured by the network device for the terminal device. For example, if a frequency domain resource in the time division duplexing configuration is at a CC granularity, the terminal device uses a BWP-level or CC-level filter bandwidth by default. For example, if a frequency domain resource in the time division duplexing configuration is at a subband granularity, the terminal device determines to use the new filtering mode, in other words, determines the bandwidth of the filter again. The network device does not need to give an indication by using signaling, so that signaling overheads can be reduced.

In a possible implementation, the method further includes: The terminal device sends capability information to the network device, where the capability information indicates at least one of the following information: the filter bandwidth supported by the terminal device or the switching duration T of the terminal device. T is a period of time for the terminal device to adapt to a switched filter parameter, and the filter parameter includes one or more of the following: the bandwidth, the center frequency, a frequency range of the bandwidth, or another analog parameter of the filter. It should be understood that the analog parameter of the filter may be considered as some parameters related to a hardware circuit of the filter. In this solution, the terminal device may notify the network device of the capability information of the terminal device, for example, the filter bandwidth supported by the terminal device. In this way, the network device may determine an appropriate first bandwidth for the terminal device with reference to the filter bandwidth supported by the terminal device. Considering that the terminal device may change the filter parameter, for example, in a frequency-hopping transmission scenario, the filter of the terminal device switches the bandwidth, the frequency range of the bandwidth, or the center frequency. Therefore, the terminal device may further notify the network device, to assist the network device in determining an appropriate occasion to send information to the terminal device, to ensure that the terminal device has completed switching of the filter parameter before the information of the network device arrives.

It should be noted that in this embodiment of this application, the first aspect and the implementations of the first aspect may be combined with the second aspect and the implementations of the second aspect.

According to a third aspect, a communication method is provided, and may be performed by a second communication apparatus. The second communication apparatus may be a communication device or a communication apparatus, for example, a chip system, that can support the communication device to implement a function needed in the method. The following provides descriptions by using an example in which the communication device is a network device. The method includes:

The network device determines first indication information, and sends the first indication information to a terminal device. The first indication information indicates a first time interval. The first time interval is an interval between an end time point of a first signal and a start time point of a second signal. The terminal device receives or sends the second signal at least after the first time interval elapses after the first signal. The first signal and the second signal are sent in a same bandwidth part (bandwidth part, BWP). A first filter parameter corresponding to the first signal is different from a second filter parameter corresponding to the second signal. The first time interval is related to switching duration of the terminal device, and the switching duration is duration needed for a filter of the terminal device to switch from the first filter parameter to the second filter parameter and for the terminal device to adapt to the second filter parameter.

In a possible implementation, that the first time interval is related to switching duration of the terminal device includes: The first time interval is greater than or equal to the switching duration T, or the first time interval is greater than or equal to a sum T' of the switching duration and first duration.

In a possible implementation, the network device sends the second signal after sending the first signal to the terminal device. The first time interval is greater than or equal to T', and the first duration is processing duration T1 of the first signal.

In a possible implementation, the network device receives the second signal from the terminal device after sending the first signal to the terminal device. The first time interval is greater than or equal to T', and the first duration is a sum of processing duration T1 of the first signal and preparation duration T2 of the second signal.

In a possible implementation, the network device receives the second signal from the terminal device after receiving the first signal from the terminal device. The first time interval is greater than or equal to T', and the first duration is greater than or equal to 0.

In a possible implementation, the first indication information is carried in the first signal.

For technical effects brought by the third aspect or the possible implementations of the third aspect, refer to the descriptions of the technical effects of the first aspect and the possible implementations of the first aspect. Details are not described herein again.

According to a fourth aspect, a communication method is provided, and may be performed by a second communication apparatus. The second communication apparatus may be a communication device or a communication apparatus, for example, a chip system, that can support the communication device to implement a function needed in the method. The following provides descriptions by using an example in which the communication device is a network device. The method includes:

The network device determines a first bandwidth of a filter of a terminal device, and sends third indication information to the terminal device. The third indication information indicates the first bandwidth. The filter is configured to filter a signal on a first time-frequency resource. The first time-frequency resource belongs to a second time-frequency resource. A time domain resource corresponding to the first time-frequency resource is the same as a time domain resource corresponding to the second time-frequency resource, a frequency domain resource corresponding to the second time-frequency resource includes at least two subbands, and transmission directions of the at least two subbands include an uplink transmission direction and a downlink transmission direction. A frequency domain resource corresponding to the first time-frequency resource is a first subband in the at least two subbands. The first bandwidth is greater than or equal to a bandwidth occupied by the first subband in a BWP, and is less than an active BWP of the terminal device or a CC.

In a possible implementation, the first bandwidth is a minimum filter bandwidth that is in a filter bandwidth supported by the terminal device and that is greater than or equal to the bandwidth occupied by the first subband in the BWP.

In an alternative solution, the first bandwidth may be a minimum filter bandwidth greater than or equal to a third bandwidth, where the third bandwidth is a bandwidth occupied by a channel carrying the signal on the first time-frequency resource. Alternatively, the third bandwidth is a bandwidth occupied by the first subband in the CC.

In a possible implementation, that the first bandwidth is a minimum filter bandwidth that is in a filter bandwidth supported by the terminal device and that is greater than or equal to the bandwidth occupied by the first subband in the BWP includes: The first bandwidth is a minimum filter bandwidth that is in the filter bandwidth supported by the terminal device in at least one bandwidth and that is greater than or equal to the bandwidth occupied by the first subband in the BWP.

In a possible implementation, the first signal on the first time-frequency resource is sent in a frequency hopping manner. A time interval between an n^{th} hop of the first signal and an (n+1)^{th} hop of the first signal is T3. The first bandwidth is further determined based on T3 and switching duration T of the terminal device. n is an integer greater than or equal to 1.

In a possible implementation, T3 is less than T, and a bandwidth occupied by a channel carrying the first signal is bandwidths occupied by a channel carrying the n^{th} hop of the first signal and a channel carrying the (n+1)^{th} hop of the first signal. T3 is less than T, and the bandwidth occupied by the first subband in the BWP is bandwidths, in the BWP, occupied by a subband in which the channel carrying the n^{th} hop of the first signal is located and a subband in which the channel carrying the (n+1)^{th} hop of the first signal is located. T3 is less than T, and the bandwidth occupied by the first subband in the CC is bandwidths, in the CC, occupied by the subband in which the channel carrying the n^{th} hop of the first signal is located and the subband in which the channel carrying the (n+1)^{th} hop of the first signal is located.

In a possible implementation, the method further includes: The network device sends second indication information to the terminal device, where the second indication information indicates a first filtering mode in a plurality of filtering modes. The first filtering mode is for triggering the terminal device to determine the first bandwidth.

In a possible implementation, the method further includes: The network device sends configuration information to the terminal device, where the configuration information includes a time division duplexing configuration configured by the network device for the terminal device. The time division duplexing configuration corresponds to a first filtering mode, and the first filtering mode is for triggering the terminal device to determine the first bandwidth.

In a possible implementation, the method further includes: The network device receives capability information from the terminal device, where the capability information indicates at least one of the following information: the filter bandwidth supported by the terminal device or the switching duration T of the terminal device.

For technical effects brought by the fourth aspect or the possible implementations of the fourth aspect, refer to the descriptions of the technical effects of the second aspect and the possible implementations of the second aspect. Details are not described herein again.

According to a fifth aspect, an embodiment of this application provides a communication apparatus. The communication apparatus has a function of implementing behavior in the method example in the first aspect and/or the second aspect. For beneficial effects, refer to the descriptions of the first aspect and/or the second aspect. Details are not described herein again. The communication apparatus may be the terminal device in the first aspect and/or the second aspect, or may be an apparatus, for example, a chip or a chip system, that can support the terminal device in the first aspect and/or the second aspect to implement a function needed in the method provided in the first aspect and/or the second aspect. In a possible design, the communication apparatus includes a corresponding means (means) or module configured to perform the method in the first aspect and/or the second aspect. For example, the communication apparatus includes a processing unit (sometimes also referred to as a processing module or a processor) and/or a transceiver unit (sometimes also referred to as a transceiver module or a transceiver). These units (modules) may perform corresponding functions in the method example in the first aspect and/or the second aspect. For details, refer to the detailed descriptions in the method example, and the details are not described herein again.

According to a sixth aspect, an embodiment of this application provides a communication apparatus. The communication apparatus has a function of implementing behavior in the method example in the third aspect and/or the fourth aspect. For beneficial effects, refer to the descriptions of the third aspect and/or the fourth aspect. Details are not described herein again. The communication apparatus may be the network device in the third aspect and/or the fourth aspect, or may be an apparatus, for example, a chip or a chip system, that can support the network device in the third aspect and/or the fourth aspect to implement a function needed in the method provided in the third aspect and/or the fourth aspect. In a possible design, the communication apparatus includes a corresponding means (means) or module configured to perform the method in the third aspect and/or the fourth aspect. For example, the communication apparatus includes a processing unit (sometimes also referred to as a processing module or a processor) and/or a transceiver unit (sometimes also referred to as a transceiver module or a transceiver). These units (modules) may perform corresponding functions in the method example in the third aspect and/or the fourth aspect. For details, refer to the detailed descriptions in the method example, and the details are not described herein again.

According to a seventh aspect, an embodiment of this application provides a communication apparatus. The communication apparatus may be the communication apparatus in the fifth aspect or the sixth aspect in the foregoing embodiments, or may be a chip or a chip system disposed in the communication apparatus in the fifth aspect or the sixth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the terminal device or the network device in the foregoing method embodiments.

According to an eighth aspect, an embodiment of this application provides a communication apparatus. The communication apparatus includes an input/output interface and a logic circuit. The input/output interface is configured to input and/or output information. The logic circuit is configured to perform the method in the first aspect and/or the second aspect, or is configured to perform the method in the third aspect and/or the fourth aspect.

According to a ninth aspect, an embodiment of this application provides a chip system. The chip system includes a processor, may further include a memory and/or a communication interface, and is configured to implement the method in the first aspect and/or the second aspect. In a possible implementation, the chip system further includes the memory, configured to store program instructions and/or data. The chip system may include a chip, or may include a chip and another discrete component.

According to a tenth aspect, an embodiment of this application provides a chip system. The chip system includes a processor, may further include a memory and/or a communication interface, and is configured to implement the method in the third aspect and/or the fourth aspect. In a possible implementation, the chip system further includes the memory, configured to store program instructions and/or data. The chip system may include a chip, or may include a chip and another discrete component.

According to an eleventh aspect, an embodiment of this application provides a communication system. The communication system includes the communication apparatus in the fifth aspect configured to implement the method in the first aspect and the communication apparatus in the sixth aspect configured to implement the method in the third aspect. Alternatively, the communication system includes the communication apparatus in the fifth aspect configured to implement the method in the second aspect and the communication apparatus in the sixth aspect configured to implement the method in the fourth aspect.

According to a twelfth aspect, this application provides a computer-readable storage medium. The computer-readable storage medium stores a computer program; and when the computer program is run, the method in any one of the first aspect to the fourth aspect is implemented.

According to a thirteenth aspect, a computer program product is provided. The computer program product includes computer program code; and when the computer program code is run, the method in any one of the first aspect to the fourth aspect is performed.

For beneficial effects of the fifth aspect to the thirteenth aspect and the implementations of the fifth aspect to the thirteenth aspect, refer to the descriptions of the beneficial effects of the first aspect and the second aspect or the possible implementations of the first aspect and the second aspect.

### BRIEF DESCRIPTION OF DRAWINGS

FIG. 1 is a schematic diagram of an uplink and a downlink in a TDD system;
FIG. 2 is a schematic diagram of SBFD;
FIG. 3 is a schematic diagram of CLI between terminal devices;
FIG. 4 is a schematic diagram of filtering in a TDD system;
FIG. 5 is a schematic diagram of performing filtering in an SBFD system through a filter in a TDD system;
FIG. 6 is an example architectural diagram of a communication system to which an embodiment of this application is applicable;
FIG. 7 is a schematic flowchart of a first communication method according to an embodiment of this application;
FIG. 8 is a schematic flowchart of a second communication method according to an embodiment of this application;
FIG. 9 is a schematic diagram of a second time-frequency resource according to an embodiment of this application;
FIG. 10 is a schematic diagram of time-frequency resources occupied by a plurality of terminal devices to send first signals according to an embodiment of this application;
FIG. 11 is a first schematic diagram of sending a first signal and receiving a second signal by a terminal device according to an embodiment of this application;
FIG. 12 is a second schematic diagram of sending a first signal and receiving a second signal by a terminal device according to an embodiment of this application;
FIG. 13 is a third schematic diagram of sending a first signal and receiving a second signal by a terminal device according to an embodiment of this application;
FIG. 14 is a fourth schematic diagram of sending a first signal and receiving a second signal by a terminal device according to an embodiment of this application;
FIG. 15 is a fifth schematic diagram of sending a first signal and receiving a second signal by a terminal device according to an embodiment of this application;
FIG. 16 is a sixth schematic diagram of sending a first signal and receiving a second signal by a terminal device according to an embodiment of this application;
FIG. 17 is a schematic diagram of sending a first signal in a frequency hopping manner according to an embodiment of this application;
FIG. 18 is a schematic flowchart of a third communication method according to an embodiment of this application;
FIG. 19 is a schematic flowchart of a fourth communication method according to an embodiment of this application;
FIG. 20 is a schematic diagram of a structure of a communication apparatus according to an embodiment of this application;
FIG. 21 is a schematic diagram of another structure of a communication apparatus according to an embodiment of this application;
FIG. 22 is an example schematic diagram of a structure of a communication apparatus according to an embodiment of this application; and
FIG. 23 is an example schematic diagram of a structure of another communication apparatus according to an embodiment of this application.

### DESCRIPTION OF EMBODIMENTS

To make purposes, technical solutions, and advantages of embodiments of this application clearer, the following clearly and completely describes the technical solutions of embodiments of this application with reference to the accompanying drawings in embodiments of this application.

Some terminologies in embodiments of this application are first described, to facilitate understanding of embodiments of this application.
(1) A network device is an access device through which a terminal device accesses a mobile communication system in a wireless manner, and includes an access network (access network, AN) device, for example, a base station. The network device may alternatively be a device that communicates with the terminal device over an air interface. The network device may include an evolved NodeB (evolved NodeB) in a long term evolution (long term evolution, LTE) system or a long term evolution-advanced (long term evolution-advanced, LTE-A) system, where the evolved NodeB may be referred to as an eNB or an e-NodeB for short. The eNB is an apparatus, deployed in a radio access network, that meets a fourth generation (fourth generation, 4G) mobile communication technology standard and that provides a wireless communication function for the terminal device. The network device may alternatively be a new radio controller (new radio controller, NR controller), a gNodeB (gNodeB, gNB) in a 5G system, a central unit (central unit), a new radio base station, a radio remote module, a micro base station (also referred to as a small cell), a relay (relay), a distributed unit (distributed unit), macro base stations in various forms, a transmission reception point (transmission reception point, TRP), a transmission measurement function (transmission measurement function, TMF), a transmission point (transmission point, TP), or any other wireless access device. Embodiments of this application are not limited thereto. The network device may alternatively include a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. A specific technology and a specific device form used by the network device are not limited in embodiments of this application. The network device may correspond to the eNB in a 4G system, and correspond to the gNB in the 5G system.

In addition, the base station in embodiments of this application may include the central unit (central unit, CU) and the distributed unit (distributed unit, DU), and a plurality of DUs may be centrally controlled by one CU. The CU and the DU may be divided based on wireless network protocol layer functions thereof. For example, functions of a packet data convergence protocol (packet data convergence protocol, PDCP) layer and a protocol layer above the PDCP layer are set in the CU, and functions of protocol layers below the PDCP layer, for example, a radio link control (radio link control, RLC) layer and a media access control (media access control, MAC) layer, are set in the DU. It should be noted that, such protocol layer division is merely an example, and there may be other protocol layer division. A radio frequency apparatus may be remotely disposed and not placed in the DU, may be integrated into the DU, or may be partially remotely disposed and partially integrated into the DU. This is not limited in embodiments of this application. In addition, in some embodiments, a control plane (control plane, CP) and a user plane (user plane, UP) of the CU may be further separated into different entities for implementation, where the entities are respectively a control-plane CU entity (CU-CP entity) and a user-plane CU entity (CU-UP entity). In this network architecture, signaling generated by the CU may be sent to the terminal device through the DU, or signaling generated by UE may be sent to the CU through the DU. The DU may directly transparently transmit the signaling to the UE or the CU through protocol layer encapsulation without parsing the signaling. In this network architecture, the CU is classified as a network device on a radio access network (radio access network, RAN) side. In addition, the CU may alternatively be classified as a network device on a core network (core network, CN) side. This is not limited in this application.

(2) The terminal device may be user equipment (user equipment, UE), and is sometimes also referred to as a terminal, an access station, a UE station, a remote station, a wireless communication device, a user apparatus, or the like. The terminal device is a device that has a wireless transceiver function, and may send a signal to the network device, or receive a signal from the network device. The terminal device is configured to connect people, things, machines, and the like, and may be widely used in various scenarios, for example, including but not limited to the following scenarios: cellular communication, device-to-device (device-to-device, D2D) communication, vehicle-to-everything (vehicle-to-everything, V2X), machine-to-machine/machine type communication (machine-to-machine/machine type communication, M2M/MTC), Internet of things (Internet of things, IoT), virtual reality (virtual reality, VR), augmented reality (augmented reality, AR), industrial control (industrial control), self-driving (self-driving), telemedicine (telemedicine), a smart grid (smart grid), smart furniture, smart office, intelligent wearable, smart transportation, a smart city (smart city), an uncrewed aerial vehicle, and a robot.

The terminal device in embodiments of this application may be a mobile phone, a tablet computer, a computer with a wireless transceiver function, a VR terminal, an AR terminal, a wireless terminal in the industrial control, a wireless terminal in the self-driving, a smart speaker in an IoT network, a wireless terminal device in the telemedicine, a wireless terminal device in the smart grid, a wireless terminal device in transportation safety, a wireless terminal device in the smart city, a wireless terminal device in a smart home, or the like. By way of example and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes.

The terminal device may further include a relay (relay). Alternatively, it may be understood that any device that can perform data communication with the base station may be considered as the terminal device. If the various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board units, OBUs). In addition, in embodiments of this application, the terminal device may be an apparatus configured to implement a function of the terminal, or may be an apparatus, for example, a chip system, that can support the terminal device to implement the function. The apparatus may be mounted in the terminal device. For example, the terminal device may alternatively be a vehicle detector. In embodiments of this application, the chip system may include a chip, or may include a chip and another discrete component. In the technical solutions provided in embodiments of this application, an example in which the apparatus configured to implement the function of the terminal is the terminal device is used to describe the technical solutions provided in embodiments of this application.

(3) A resource includes a time domain resource and a frequency domain resource, and may be considered as a resource pair including the time domain resource and the frequency domain resource. The time domain resource refers to an orthogonal frequency division modulation (orthogonal frequency division modulation, OFDM) symbol (referred to as a symbol for short in this specification) occupied in time domain. A minimum granularity of the time domain resource is not limited in embodiments of this application. For example, the minimum granularity of the time domain resource is one OFDM symbol, or may be a mini-slot (mini-slot), a slot (slot), or the like. One mini-slot may include two or more OFDM symbols, and one slot includes 14 OFDM symbols.

The frequency domain resource is a frequency resource occupied in frequency domain. A minimum granularity of the frequency domain resource may be one subcarrier, or may be a physical resource block (physical resource block, PRB), a resource block group (resource block group, RBG), or the like. One PRB includes 12 subcarriers in frequency domain, and one RBG may include two PRBs, four PRBs, eight PRBs, or 16 PRBs.

(4) A BWP is a segment of consecutive frequency resources on a CC (where the CC may be considered as a cell). One or more BWPs may be configured for one terminal device on one CC, but the terminal device can apply only one active uplink BWP and one active downlink BWP simultaneously. When a plurality of BWPs are configured for the terminal device on one CC, switching may be performed between the plurality of BWPs.

(5) Subband: One CC may be divided into a plurality of subbands. One BWP may include one or more subbands, or may overlap one or more subbands.

(6) Frequency hopping (frequency hopping) is a communication mode in which a frequency domain resource used in an information transmission process is switched according to a rule to obtain a frequency diversity gain. The frequency hopping includes inter-slot frequency hopping and intra-slot frequency hopping. The inter-slot frequency hopping means that a frequency domain resource for information transmission remains unchanged in a slot, but changes between different slots according to a predetermined rule. The intra-slot frequency hopping means that a frequency domain resource for information transmission changes in a slot according to a predetermined rule.

(7) The terms "system" and "network" in embodiments of this application may be used interchangeably. "At least one" means one or more, and "a plurality of" means two or more. The term "and/or" is an association relationship for describing associated objects, and indicates that three relationships may exist. For example, A and/or B may indicate the following cases: Only A exists, both A and B exist, and only B exists, where A and B may be in a singular form or a plural form. The character "/" generally indicates an "or" relationship between associated objects. The expression "at least one of the following items (pieces)" or a similar expression thereof refers to any combination of these items, including any combination of singular items (pieces) or plural items (pieces). For example, at least one of a, b, or c may represent: a, b, c, a and b, a and c, b and c, or a, b, and c, where a, b, and c may be singular or plural.

In addition, unless otherwise stated, ordinal numbers such as "first" and "second" in embodiments of this application are intended to distinguish between a plurality of objects, but are not intended to limit an order, a time sequence, priorities, or importance degrees of the plurality of objects. For example, a first bandwidth and a bandwidth occupied by first signal are merely intended to distinguish between different bandwidths, but do not indicate different sizes, priorities, importance degrees, or the like of the two bandwidths.

The technical solutions provided in embodiments of this application may be applied to a 5G mobile communication system, for example, a new radio (new radio, NR) system, may be applied to an LTE system, or may be applied to a next-generation mobile communication system or another similar communication system. This is not specifically limited. Certainly, the technical solutions in embodiments of this application may also be applied to another communication system, provided that the communication system has a subband full duplex (subband full duplex, SBFD) mechanism. The SBFD mechanism is proposed for a time division duplexing (time division duplexing, TDD) mechanism to reduce an uplink delay.

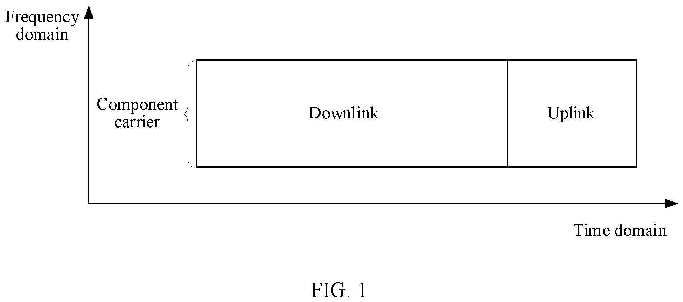

It may be understood that, in a TDD system, a quantity of time domain resources occupied by a downlink is usually greater than a quantity of time domain resources occupied by an uplink. FIG. 1 is a schematic diagram of the uplink and the downlink in the TDD system. FIG. 1 uses an example in which a frequency domain resource is one CC. It can be learned from FIG. 1 that the quantity of time domain resources occupied by the downlink is greater than the quantity of time domain resources occupied by the uplink. For the uplink, a quantity of available resources is small, coverage is poor, and a delay is long. It may be understood that uplink and downlink are relative. If a direction from a network device to a terminal device is uplink, a direction from the terminal device to the network device is downlink. If a direction from a network device to a terminal device is downlink, a direction from the terminal device to the network device is uplink (where this is used as an example in this specification).

To reduce the uplink delay, the SBFD mechanism is proposed for the TDD system. In an SBFD system, a frequency domain resource on which a CC is located may be divided into a plurality of subbands. Transmission directions of different subbands in the plurality of subbands may be the same or different. In other words, the network device may simultaneously send and receive a signal on a same time domain resource. To be specific, a resource available to uplink transmission is increased on the CC, so that coverage performance of the uplink can be enhanced, and the uplink delay can be reduced.

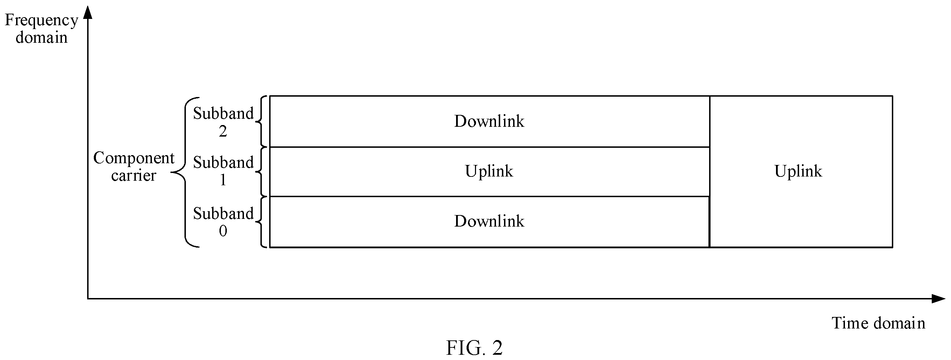

FIG. 2 is a schematic diagram of SBFD. FIG. 2 uses an example in which a frequency domain resource is one CC. As shown in FIG. 2, the CC may be divided into three subbands, and the three subbands are a subband 0, a subband 1, and a subband 2. Transmission directions of different subbands may be different. FIG. 2 uses an example in which a transmission direction of the subband 1 in the three subbands is uplink, and transmission directions of the subband 0 and the subband 2 are downlink. It can be learned from FIG. 2 that an uplink transmission resource available to the terminal device is increased.

When a plurality of terminal devices simultaneously perform uplink transmission and downlink transmission in a plurality of subbands, the uplink transmission causes interference to the downlink transmission, to be specific, causes CLI between the terminal devices. For example,

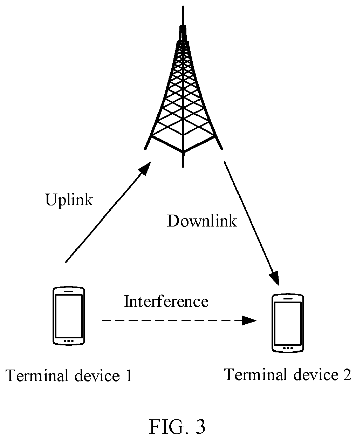

FIG. 3 is a schematic diagram of CLI between terminal devices. FIG. 3 uses an example in which there is one network device and two terminal devices. The two terminal devices are a terminal device 1 and a terminal device 2. With reference to FIG. 2, it is assumed that the network device sends a downlink signal to the terminal device 2 in the subband 0 and/or the subband 2, and the terminal device 1 sends an uplink signal to the network device in the subband 1. Because the terminal device 2 receives the downlink signal from the network device, and may receive the uplink signal from the terminal device 1, for the terminal device 2, the uplink signal sent by the terminal device 1 may be an interference signal (shown by a dashed line in FIG. 3). This affects downlink transmission performance, for example, reduces an average throughput of a network. Especially, when the terminal device 1 is close to the terminal device 2, because the signals received by the terminal device 2 include the signal sent by the terminal device 1, power of the signals received by the terminal device 2 is high. This causes a receiver to be non-linear or saturated, in other words, causes the receiver of the terminal device 2 to be blocked. In a severe case, the terminal device 2 may fail to work normally. In this specification, interference that causes the receiver of the terminal device to be blocked is referred to as blocking interference. CLI caused by the terminal device 1 to the terminal device 2 mainly includes interference caused by leakage of the uplink signal of the terminal device 1 in the subband 1 to an adjacent subband (namely, a subband in which the signal from the network device is located). To reduce the CLI between terminal devices, before sending the signal, the terminal device 1 may filter the signal through a filter with a small bandwidth, to reduce or avoid signal leakage to the adjacent subband. Similarly, the terminal device 2 may filter the received signal through a filter with a small bandwidth, to reduce power of a received CLI signal, and therefore reduce the power of the signal received by the receiver and reduce or avoid the blocking interference.

However, filtering a to-be-sent signal or a received signal by the terminal device through the filter may involve switching of a filter parameter. For example, after sending a first signal to the network device, the terminal device further sends a second signal to the network device. A first filter parameter used by the terminal device to send the first signal is different from a second filter parameter used by the terminal device to send the second signal. Before sending the second signal, the terminal device needs to switch from the first filter parameter to the second filter parameter. However, specific duration is needed from switching from the first filter parameter to the second filter parameter by the terminal device to using the second filter parameter by the terminal device. If a time interval between the first signal and the second signal is short, the terminal device may fail to complete processing of the first signal, preparation of the second signal, and adaptation to the second filter parameter in a timely manner. Consequently, the terminal device sends the second signal by using the first filter parameter. This causes a failure to correctly receive the second signal by the network device or strong interference from the second signal to another signal.

In view of this, embodiments of this application provide a communication method. In the method, considering that a filter parameter of a terminal device may be switched, a network device determines a time interval between a first signal and a second signal with reference to switching duration of the terminal device when the filter parameter is switched, to ensure that duration between the first signal and the second signal is sufficient for the terminal device to complete the switching of the filter parameter. This can reduce interference from a to-be-sent signal, for example, the second signal, to another signal or interference to the received second signal.

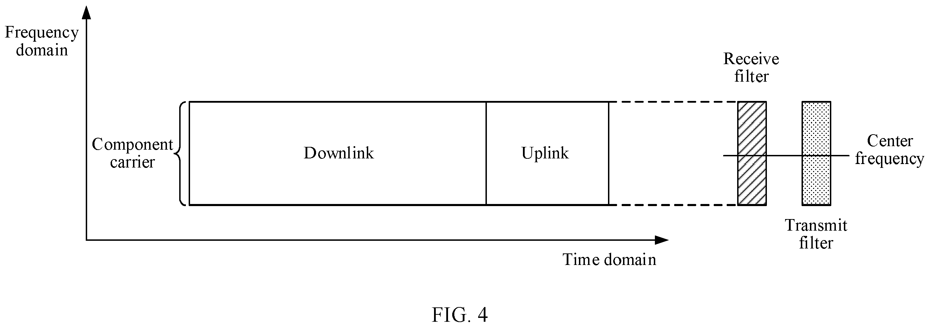

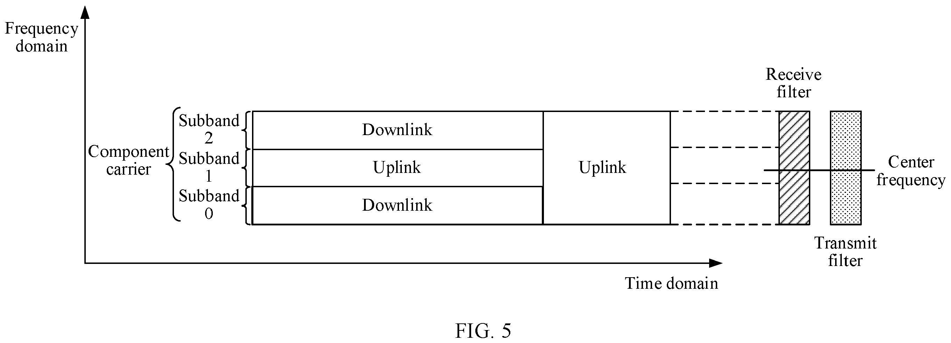

In addition, a current filter bandwidth is at a CC or BWP granularity, to be specific, the filter bandwidth is greater than or equal to a CC or an active BWP of the terminal device. This may also be considered as: The filter bandwidth is at a CC level or a BWP level. In SBFD, the current filter bandwidth is not applicable. For example, FIG. 4 is a schematic diagram of filtering in a TDD system. In FIG. 4, a terminal device filters to-be-sent information through a filter with a CC-level or BWP-level bandwidth, so that an adjacent channel leakage power ratio (adjacent channel leakage power ratio, ACLR) can be increased, to reduce interference caused by leakage to an adjacent-frequency cell. However, in an SBFD system, CLI between terminal devices still exists if a design of the filter in the TDD system continues to be used for filtering. For example, FIG. 5 is a schematic diagram of performing filtering in an SBFD system through a filter in a TDD system. It can be learned from FIG. 5 that a filter with a CC-level or BWP-level bandwidth filters information sent in a subband 1. Because the bandwidth of the filter is far greater than a width of the subband 1, a signal in the subband 1 still leaks to a subband 0 and a subband 2. To be specific, CLI still exists between terminal devices, and blocking interference may still be caused to the terminal device.

In view of this, embodiments of this application provide a communication method. In the method, when sending information, a terminal device may determine a bandwidth of a filter that is to filter the information. For example, if a frequency domain resource used by the terminal device to send the information is at a subband level, the bandwidth of the filter may also be at the subband level, to reduce CLI to another terminal device in a cell. It may be understood that the terminal device may alternatively determine the bandwidth of the filter based on a frequency domain resource for received information, and filter the received information, to reduce strength of an interference signal received by the terminal device, and reduce a probability that a receiver of the terminal device is blocked.

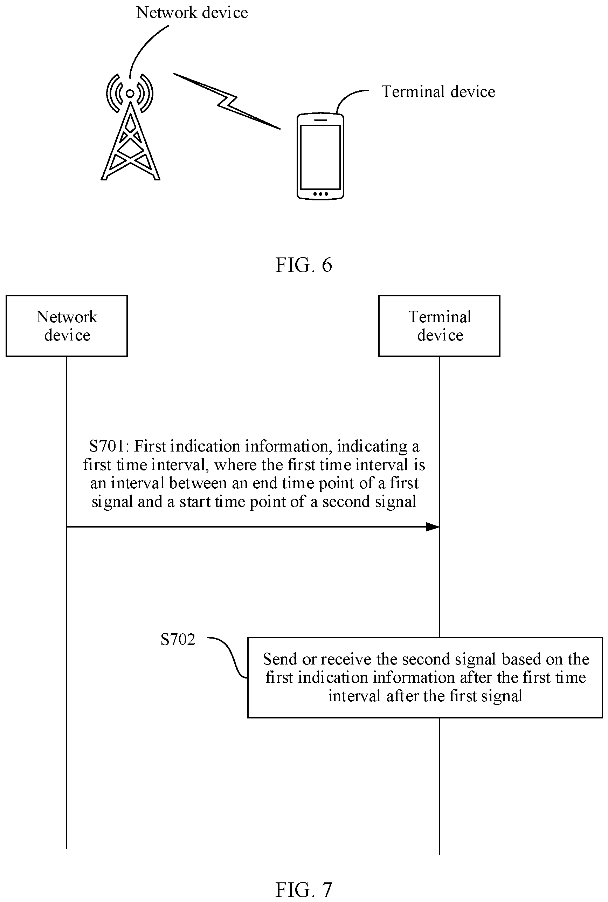

FIG. 6 is an example architectural diagram of a communication system to which an embodiment of this application is applicable. The communication system includes a network device and a terminal device, and the network device and the terminal device may communicate with each other. It should be understood that communication between one network device and one terminal device is used as an example in the network architecture in FIG. 6. During actual application, there may be more network devices and terminal devices in the communication system, and communication may be performed between network devices or between terminal devices. One network device may simultaneously communicate with a plurality of terminal devices. A plurality of network devices may also simultaneously communicate with a specific terminal device. It should be noted that FIG. 6 is merely an example. Types of devices included in the communication system are not limited in this embodiment of this application. For example, the communication system may further include another network device, for example, a wireless relay device or a wireless backhaul device. The following description process uses an example in which the communication method provided in embodiments of this application is applied to the network architecture shown in FIG. 6. In addition, the method may be performed by two communication apparatuses. The two communication apparatuses are, for example, a first communication apparatus and a second communication apparatus. The first communication apparatus may be a terminal device or a communication apparatus that can support the terminal device to implement a function needed in the method, or certainly may be another communication apparatus, for example, a chip system. Similarly, the second communication apparatus may be a network device or a communication apparatus that can support the network device to implement a function needed in the method, or certainly may be another communication apparatus, for example, a chip system. Implementations of the first communication apparatus and the second communication apparatus are not limited. For example, the first communication apparatus may be the terminal device, and the second communication apparatus is the network device. Alternatively, the first communication apparatus is the terminal device, and the second communication apparatus is the communication apparatus that can support the network device to implement the function needed in the method.

With reference to the accompanying drawings, the following describes the communication method provided in embodiments of this application by using an example in which the method is performed by the terminal device and the network device, in other words, by using an example in which the first communication apparatus is the terminal device and the second communication apparatus is the network device. If embodiments of this application are applied to the network architecture shown in FIG. 6, the terminal device described below may be the terminal device in the network architecture shown in FIG. 6. It should be noted that embodiments of this application merely use the example in which the method is performed by the terminal device and the network device, and the method is not limited to being performed by the terminal device.

FIG. 7 is a schematic flowchart of a first communication method according to an embodiment of this application.

S701: A network device sends first indication information to a terminal device. Correspondingly, the terminal device receives the first indication information from the network device, where the first indication information indicates a first time interval. The first time interval is an interval between an end time point of a first signal and a start time point of a second signal.

S702: The terminal device sends or receives the second signal based on the first indication information after the first time interval elapses after the first signal.

The first signal may be a signal sent by the terminal device to the network device, or may be a signal sent by the network device to the terminal device. Similarly, the second signal may be a signal sent by the terminal device to the network device, or may be a signal sent by the network device to the terminal device. It may be understood that the terminal device may filter a to-be-sent signal or a received signal through a filter. The terminal device needs to switch a filter parameter if different signals correspond to different filter parameters. For example, the first signal and the second signal are sent in a same BWP, and occupy different subbands. In this case, a first filter parameter may be different from a second filter parameter. For example, after receiving the first signal, the terminal device filters the first signal through a filter with the first filter parameter, then receives the second signal, and filters the second signal through a filter with the second filter parameter. However, specific duration is needed for the filter to switch from the first filter parameter to the second filter parameter and for the terminal device to adapt to the second filter parameter. If the terminal device has not adapted to the second filter parameter when the second signal arrives, in other words, the terminal device has received the second signal before completing the switching of the filter parameter, it is clear that the second signal cannot be well filtered, or even cannot be filtered. Similarly, if the terminal device has not completed the switching of the filter parameter before sending the second signal to the network device, interference caused by the second signal to another signal cannot be eliminated. It may be understood that the filter parameter may include a bandwidth of the filter, a center frequency of the filter, and a frequency range of the bandwidth of the filter. It may be understood that the foregoing problem may also exist when the first signal and the second signal occupy a same subband. For example, in a slot #0, directions of all subbands in the BWP are downlink. In this case, there is no CLI interference, and the terminal device performs BWP-level filtering. In a slot #1, there are two subbands in different transmission directions in the BWP, and the terminal device performs subband-level filtering. The terminal device receives the first signal in a first subband in the slot #0, and sends or receives the second signal in the first subband in the slot #1. The first filter parameter is different from the second filter parameter, and the terminal device needs to switch the filter parameter.

In this specification, duration needed for the terminal device to switch the filter parameter and apply a switched filter parameter is referred to as switching duration of the terminal device, and is denoted as T. To ensure that the terminal device has a sufficient period of time to complete the switching of the filter parameter before the terminal device sends or receives the signal, the switching duration T of the terminal device may be comprehensively considered in embodiments of this application. To be specific, the first time interval is related to T. For example, the first time interval is greater than or equal to T, or is greater than or equal to T', where T' is a sum of T and first duration, and the first duration is greater than or equal to 0. The first time interval varies with the first signal, the second signal, and transmission directions of the first signal and the second signal. With reference to a plurality of specific scenarios, the following describes how to determine the first time interval.

Case 1: The network device sends the first signal and the second signal to the terminal device. For example, the first signal may be downlink control information (downlink control information, DCI), and the second signal may be a signal carried on a physical downlink shared channel (physical downlink shared channel, PDSCH). For another example, the first signal is DCI, and the second signal may be an aperiodic channel state information reference signal (channel state information reference signal, CSI-RS). It should be understood that a start time domain position and an end time domain position of the second signal may be obtained based on indication information included in the first signal or another signal and radio resource control (Radio resource control, RRC) configured information. For another example, the first signal is a PDSCH, the second signal is a PDSCH, and the first signal and the second signal may carry different information. In this case, the network device may indicate a time domain position of the first signal and a time domain position of the second signal by using another signal. For example, the network device indicates the time domain position of the first signal by using a third signal, and indicates the time domain position of the second signal by using a fourth signal. The third signal and the fourth signal are DCI. Alternatively, the network device indicates both the time domain position of the first signal and the time domain position of the second signal by using a third signal. The third signal is DCI.

The terminal device receives the first signal, and processes the first signal in duration T1, to determine a first time domain position of the second signal. T1 may be considered as processing duration of the first signal. In this case, the first time interval should be greater than or equal to T', to be specific, the first time interval should be greater than or equal to a sum of T1 and T, and the first duration is T1. Therefore, the terminal device has a sufficient period of time to adapt to the second filter parameter, in other words, the terminal device has completed the switching of the filter parameter. After receiving the first signal, the terminal device may receive the second signal at the first time domain position after the first time interval, and filter the second signal by using the switched second filter parameter. On the contrary, if the first time interval is less than the sum of T1 and T, in other words, the terminal device has not completed the switching of the filter parameter, the terminal device may not receive the second signal.

It may be understood that, if the terminal device has learned of the first time domain position of the second signal without parsing the first signal after receiving the first signal, the first time interval should be greater than or equal to the switching duration T. For example, the first signal is a PDSCH, and the second signal is a repetition (repetition) of the first signal. The terminal device may determine first time domain positions of the first signal and the second signal by receiving another signal and an RRC configuration. For another example, a transport block over multiple slot (Transport Block over Multiple slot, TBoMS) transmission technology is applied to a downlink signal, the first signal is in a slot #0, the second signal is in a slot #1, and the terminal device may determine first time domain positions of the first signal and the second signal by receiving another signal. In these cases, the first time interval should be greater than or equal to T. After receiving the first signal, the terminal device receives the second signal after the first time interval.

Case 2: The network device sends the first signal to the terminal device. After receiving the first signal, the terminal device sends the second signal to the network device. For example, the first signal may be DCI, and the second signal may be a physical uplink shared channel (physical uplink shared channel, PUSCH). For another example, the first signal is DCI, and the second signal may be an aperiodic CSI-RS measurement reporting signal. For still another example, the first signal is DCI, and the second signal is an aperiodic sounding reference signal (sounding reference signal, SRS). For example, the first signal is a PDSCH, and the second signal is HARQ-ACK information of the first signal. For another example, the first signal is an aperiodic CSI-RS measurement resource signal, and the second signal is an aperiodic CSI-RS measurement reporting signal.

The first signal may indicate a first time domain position of the second signal. This is similar to the case 1. It should be understood that before sending the second signal, the terminal device may need to perform some preparation operations, and duration needed for the preparation operations is referred to as preparation duration T2 of the second signal. Therefore, the network device needs to determine the first time interval in consideration of T1 and T2. If the first filter parameter is different from the second filter parameter, the switching duration T should be further considered for the first time interval, to be specific, the first time interval should be greater than or equal to a sum of T1, T2, and T, to ensure that the terminal device is ready before sending the second signal. After receiving the first signal, the terminal device sends the second signal at the first time domain position after the first time interval. If the first filter parameter is the same as the second filter parameter, the filter parameter does not need to be switched, and the first time interval should be greater than or equal to a sum of T1 and T2.

Case 3: The terminal device sends the first signal to the network device, and sends the second signal to the network device after the first time interval. In this case, because the terminal device sends the signal, it only needs to be ensured that the switching of the filter parameter can be completed before the signal is sent. To be specific, the first time interval should be greater than or equal to the switching duration T. In other words, the first time interval is greater than or equal to T', and the first duration is greater than or equal to 0. For example, the first signal may be a hybrid automatic repeat request (hybrid automatic repeat request, HARQ) ACK signal of another signal. The second signal may be triggered by another signal received by the terminal device, in other words, the another signal includes information indicating to send the second signal. For example, the terminal device may receive a third signal and a fourth signal, where the first signal is a HARQ ACK signal of the third signal, and the fourth signal includes information indicating to send the second signal. The third signal may further indicate time domain positions of the fourth signal, the first signal, and the second signal. Therefore, the terminal device has learned of the time domain positions of the first signal and the second signal after demodulating the third signal. In other words, after sending the first signal, the terminal device does not need to determine the time domain position for sending the second signal. Therefore, the first time interval should be greater than or equal to the switching duration T. For example, the first time interval is greater than or equal to the sum of the switching duration T and the first duration.

For example, the terminal device sends the second signal after the first time interval elapses after sending the first signal. In this case, because the terminal device sends the second signal, it only needs to be ensured that the switching of the filter parameter can be completed before the second signal is sent. To be specific, the first time interval should be greater than or equal to the switching duration T. In other words, the first time interval is greater than or equal to T', and the first duration is greater than or equal to 0. For example, the first signal may be HARQ-ACK information of another signal, and the information is carried on a PUCCH. The second signal may be a semi-persistent report (Semi-persistent report) carried on a PUCCH, and the report includes a measurement result of a semi-persistent (Semi-persistent) CSI-RS. The second signal is triggered by another signal received by the terminal device, in other words, the another signal includes information indicating to send the second signal. For example, the terminal device may receive a third signal and a fourth signal, where the third signal is a PDSCH signal, and the fourth signal is a DCI signal. The first signal is HARQ-ACK information of the third signal, namely, the PDSCH, and the fourth signal, namely, the DCI signal, includes information for activating the sending of the second signal. The third signal may further indicate time domain positions of the fourth signal and the first signal. Therefore, the terminal device has learned of the time domain position of the first signal after demodulating the third signal. The terminal device may obtain a time domain position of the second signal after demodulating the fourth signal. Preparation duration of the second signal may start after the demodulation of the fourth signal, and data preparation may be completed before the first signal is received. Therefore, the first time interval should be greater than or equal to the switching duration T, to meet a switching requirement of the terminal device. It should be understood that a time sequence of the foregoing four signals is: the third signal, the fourth signal, the first signal, and the second signal.

It may be understood that, if the terminal device has learned of the first time domain position of the second signal without parsing the first signal after receiving the first signal, and does not need to prepare the second signal, the first time interval should be greater than or equal to the switching duration T. For example, the first signal is a PUSCH, and the second signal is a repetition of the first signal. For another example, the transport block over multiple slot (Transport Block over Multiple slot, TBoMS) transmission technology is applied to the first signal and the second signal, the first signal is in a slot #0, and the second signal is in a slot #1. For another example, the first signal is a PUSCH, the second signal is a PUSCH, and the first signal and the second signal may carry different information. In this case, the network device may indicate the time domain position of the first signal and the time domain position of the second signal by using another signal. For example, the network device indicates the time domain position of the first signal by using one piece of DCI, and indicates the time domain position of the second signal by using another piece of DCI. Alternatively, the network device indicates both the time domain position of the first signal and the time domain position of the second signal by using one piece of DCI. In these several cases, the terminal device may determine the time domain position of the first signal and the time domain position of the second signal by using the DCI from the network device.

It should be noted that the first indication information may be carried in the first signal. In other words, the first signal may include the first indication information, or may indicate the first time interval indicated by the first indication information. The first indication information may alternatively be carried in another signal from the network device.

It should be noted that an uplink switching gap (uplink switching gap) is considered in none of the foregoing case 1 to case 3, and is denoted as Tswitch. For example, the first signal is DCI, the second signal is a signal carried on a PUSCH or is an aperiodic SRS, and Tswitch is considered for the first time interval. For another example, the first signal is DCI, the second signal is an aperiodic CSI-RS measurement reporting signal, and Tswitch is also considered in some scenarios. When the uplink switching gap is triggered, the first time interval is a sum of T1, T2, and Tswitch.

In embodiments of this application, the sum (namely, the first duration) of T1 and T2 may be understood in the following manners.

Example 1: The first signal is a PDSCH, and the second signal is HARQ-ACK information of the first signal. The sum of T1 and T2 may be understood in the following manner. For the first symbol of a PUCCH carrying the HARQ-ACK information, a position of the first symbol is determined based on an allocated HARQ-ACK occasion K1 and a used PUCCH resource. Considering impact of timing advance, the first symbol should not be earlier than a symbol L1, where the symbol L1 that includes a CP is a next uplink symbol after duration Tpro, 1 following a last symbol of a PDSCH carrying a transport block to be acknowledged. Tpro, 1 is the sum of T1 and T2. The sum of T1 and T2 may be understood as an interval between an end symbol of the first signal and a start symbol of the second signal. If the first filter parameter is different from the second filter parameter, the switching duration T should be further considered for the first time interval, to be specific, the first time interval should be greater than or equal to the sum of T1, T2, and T.

Example 2: The first signal is an aperiodic CSI-RS measurement signal, and the second signal is an aperiodic CSI-RS measurement reporting signal. The sum of T1 and T2 may be understood in the following manner. Considering impact of timing advance, a time interval between a last symbol of the aperiodic CSI-RS measurement signal and the first symbol of the aperiodic CSI-RS measurement reporting signal is greater than or equal to the sum of T1 and T2. A CP is considered for the first symbol. The aperiodic CSI-RS measurement signal is for measurement, and a measurement result of the measurement is carried in the aperiodic CSI-RS measurement reporting signal. The sum of T1 and T2 may be understood as an interval between an end symbol of the first signal and a start symbol of the second signal. If the first filter parameter is different from the second filter parameter, the switching duration T should be further considered for the first time interval, to be specific, the first time interval should be greater than or equal to the sum of T1, T2, and T.

Tswitch is not considered in the scenarios of the example 1 and the example 2, but is considered in some scenarios. For example, the uplink switching gap is not triggered. If the first filter parameter is the same as the second filter parameter, the sum (namely, the first duration) of T1 and T2 may be understood in the following manners.

Example 3: The first signal is DCI, and the second signal is a PUSCH signal. The first signal, namely, the DCI, indicates time domain resource assignment for the second signal, namely, the PUSCH, and the time domain resource assignment includes a slot offset K1 between an assigned slot and a slot in which the first signal, namely, the DCI, is located, a start symbol S, and a symbol length L. The first symbol of time domain resource assignment for a PUSCH transport block including a demodulation reference signal (demodulation reference signal, DMRS) of the second signal, namely, the PUSCH, should not be earlier than a symbol L2. The symbol L2 for which a cyclic prefix (CP, cyclic prefix) is considered is a next uplink symbol after duration Tpro, 2 following a last symbol of a PDCCH resource carrying DCI for scheduling the second signal, namely, the PUSCH. Tpro, 2 is the sum of T1 and T2. The sum of T1 and T2 may be understood as an interval between an end symbol of the first signal and a start symbol of the second signal. If the first filter parameter is different from the second filter parameter, the switching duration T should be further considered for the first time interval, to be specific, the first time interval should be greater than or equal to the sum of T1, T2, and T, to ensure that the terminal device is ready before sending the second signal. After receiving the first signal, the terminal device sends the second signal at the first time domain position after the first time interval.

Example 4: When the first signal is DCI, and the second signal is an aperiodic CSI-RS measurement reporting signal, the sum of T1 and T2 may be understood in the following manner. Considering impact of timing advance, a time interval between a last symbol of a PDCCH that triggers the aperiodic CSI-RS measurement reporting signal and the first symbol of the aperiodic CSI-RS measurement reporting signal is greater than or equal to the sum of T1 and T2. A CP is considered for the first symbol. The sum of T1 and T2 may be understood as an interval between an end symbol of the first signal and a start symbol of the second signal. The PDCCH carries the first signal, namely, the DCI. If the first filter parameter is different from the second filter parameter, the switching duration T should be further considered for the first time interval, to be specific, the first time interval should be greater than or equal to the sum of T1, T2, and T.

Example 5: When the first signal is DCI, and the second signal is an aperiodic SRS, the sum of T1 and T2 may be understood in the following manner. A time interval between a last symbol of a PDCCH that triggers transmission of the aperiodic SRS and the transmission of the aperiodic SRS is greater than or equal to the sum of T1 and T2. The sum of T1 and T2 may be understood as an interval between an end symbol of the first signal and a start symbol of the second signal. The PDCCH carries the first signal, namely, the DCI. If the first filter parameter is different from the second filter parameter, the switching duration T should be further considered for the first time interval, to be specific, the first time interval should be greater than or equal to the sum of T1, T2, and T.

The foregoing describes how the network device determines the first time interval and notifies the terminal device of the first time interval, to ensure, as much as possible, that the terminal device has completed the switching of the filter parameter before the terminal device sends or receives the signal. The following describes how the terminal device determines to filter a to-be-sent signal or a received signal.

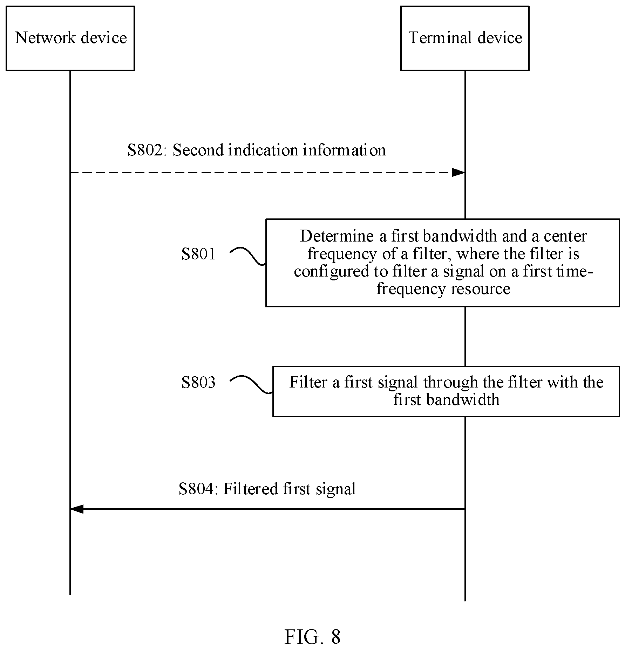

FIG. 8 is a schematic flowchart of a second communication method according to an embodiment of this application. A procedure shown in FIG. 8 uses an example in which a terminal device sends a first signal on a first time-frequency resource.

S801: The terminal device determines a first bandwidth and a center frequency of a filter, where the filter is configured to filter a signal on the first time-frequency resource. In other words, the filter filters a signal that is to be sent or is received by the terminal device on the first time-frequency resource.

The first time-frequency resource may belong to a second time-frequency resource, a time domain resource corresponding to the second time-frequency resource is the same as a time domain resource corresponding to the first time-frequency resource, and a frequency domain resource corresponding to the second time-frequency resource is a BWP, and includes a part or all of frequency domain resources in at least two subbands. Transmission directions of the at least two subbands include uplink transmission and downlink transmission, to be specific, a plurality of terminal devices may perform uplink transmission and downlink transmission in the at least two subbands. In other words, the time domain resource corresponding to the second time-frequency resource may be considered as an SBFD slot. A frequency domain resource corresponding to the first time-frequency resource may be one or more of the at least two subbands. The terminal device may send the first signal on the first time-frequency resource, to reduce a transmission delay of the first signal.

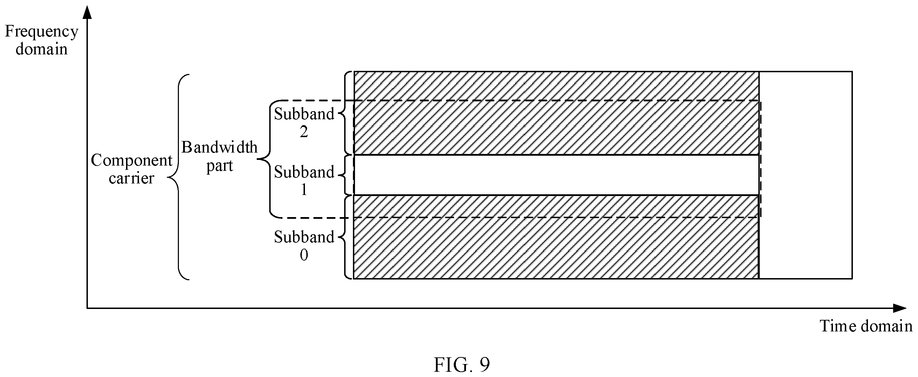

For example, FIG. 9 is a schematic diagram of the second time-frequency resource. A resource illustrated by a dashed box in FIG. 9 is the second time-frequency resource, and a resource other than a shadow part in the second time-frequency resource is the first time-frequency resource. FIG. 9 uses an example in which one CC includes three subbands, and one BWP is configured for the CC. Widths of the three subbands may be the same or may be different. As shown in FIG. 9, the frequency domain resource corresponding to the second time-frequency resource includes a part of frequency domain resources in the subband 0 and the subband 2, and includes all frequency domain resources in the subband 1. An example in which the frequency domain resource corresponding to the first time-frequency resource is the subband 1 (referred to as a first subband in this specification) is used. Because the frequency domain resource corresponding to the first time-frequency resource is at a subband level, if the terminal device filters the first signal through a filter with a BWP-level (or CC-level) bandwidth, the first signal still leaks to the subband 0 and the subband 2. To be specific, interference is caused to a terminal device that receives information in the subband 0 and the subband 2.

Therefore, in this embodiment of this application, the terminal device may determine the bandwidth (referred to as the first bandwidth in this specification) of the to-be-used filter before sending the first signal on the first time-frequency resource. For example, the frequency domain resource corresponding to the first time-frequency resource is at the subband level, and correspondingly, the first bandwidth may be less than an active BWP of the terminal device or the CC. Filtering a first time-frequency resource through the filter with the first bandwidth can reduce or avoid leakage of the first signal to another subband adjacent to the first subband, to reduce CLI between terminal devices. It may be understood that filtering, by the terminal device through the filter with the first bandwidth, information received on the first time-frequency resource can reduce CLI from another terminal device, so that power of a signal received by a receiver of the terminal device is not additionally increased due to the CLI. This reduces a blocking probability of the receiver of the terminal device.

It may be understood that the terminal device may filter, through a filter (also referred to as a transmit filter in this specification), a signal (also referred to as information) that is to be sent, and may filter a signal (also referred to as information) from a network device through a filter (also referred to as a receive filter in this specification). The terminal device also needs to determine a second bandwidth of the receive filter. This is similar to determining the first bandwidth of the transmit filter by the terminal device. A manner in which the terminal device determines the second bandwidth is similar to the manner in which the terminal device determines the first bandwidth. The following uses an example in which the terminal device determines the first bandwidth, to describe in detail how the terminal device determines the first bandwidth of the transmit filter and the second bandwidth of the receive filter. In addition, in a possible scenario, the frequency domain resource corresponding to the first time-frequency resource includes a plurality of subbands, in other words, the terminal device sends the first signal in the plurality of subbands. In this case, for the plurality of subbands, the terminal device may separately determine a first bandwidth corresponding to each subband. The terminal device filters each subband by using the first bandwidth corresponding to the subband. It should be noted that there are a plurality of subbands in a same transmission direction, and the terminal device filters the plurality of subbands together, to reduce switching of a filter parameter. For example, the BWP corresponding to the second time-frequency resource includes two subbands for downlink transmission and one subband for uplink transmission. The terminal device filters the two subbands for the downlink transmission together.

For each subband, the terminal device determines the first bandwidth in a same manner. For ease of description, the following uses an example in which the frequency domain resource corresponding to the first time-frequency resource is the first subband, to describe in detail how the terminal device determines the first bandwidth.

It may be understood that if there is only one transmission direction on a same time domain resource in the BWP, the bandwidth of the filter may be at the BWP level or the CC level. The signal that is to be sent and the signal that is received by the terminal device are filtered through the filter with the BWP-level or CC-level bandwidth. If a same time domain resource in the BWP includes an uplink transmission direction and a downlink transmission direction, the bandwidth of the filter, namely, the first bandwidth, may be less than the CC or the active BWP of the terminal device. For example, the first bandwidth may be at the subband level. The signal that is to be sent or is received by the terminal device is filtered through a filter with a subband-level bandwidth. For ease of description, in this specification, a mode of performing filtering through a filter with a subband-level bandwidth is referred to as a subband-level filtering mode. Oppositely, a mode of performing filtering through a filter with a non-subband-level bandwidth is referred to as a non-subband-level filtering mode. Optionally, the non-subband-level filtering is BWP-level filtering or CC-level filtering. The terminal device may have the following four filtering modes: transmit subband-level filtering and receive non-subband-level filtering; transmit subband-level filtering and receive subband-level filtering; transmit non-subband-level filtering and receive subband-level filtering; and transmit non-subband-level filtering and receive non-subband-level filtering. This is equivalent to: Based on the transmit non-subband-level filtering and the receive non-subband-level filtering, the transmit subband-level filtering and the receive non-subband-level filtering, the transmit subband-level filtering and the receive subband-level filtering, and the transmit non-subband-level filtering and the receive subband-level filtering are newly introduced. It should be noted that in this specification, the non-subband-level filtering is relative to the subband-level filtering. In the non-subband-level filtering mode, the bandwidth of the filter is not limited to the BWP or the CC.

In a possible implementation, the terminal device may autonomously determine whether to determine the first bandwidth, or may determine the first bandwidth based on an indication by the network device.

S802: The network device sends second indication information to the terminal device. Correspondingly, the terminal device receives the second indication information from the network device. The second indication information indicates a first filtering mode in a plurality of filtering modes, and the first filtering mode is for triggering the terminal device to determine the first bandwidth. This may also be considered as: The second indication information indicates the terminal device to determine the first bandwidth.

The first filtering mode may be considered as the subband-level filtering mode. When the terminal device sends first signal, the first filtering mode may be the transmit subband-level filtering and the receive non-subband-level filtering, or may be the transmit subband-level filtering and the receive subband-level filtering. If the terminal device receives the second indication information, the terminal device may consider that the first bandwidth needs to be determined. If the terminal device does not receive the second indication information, the terminal device may consider that the terminal device does not need to determine the first bandwidth, to be specific, the bandwidth of the filter of the terminal device is at a non-subband level by default, for example, at the BWP level or the CC level.

The second indication information may occupy one or more bits, and different bit states correspond to different filtering modes. In an example, the second indication information may occupy one bit. For example, the plurality of filtering modes include the subband-level filtering mode and the non-subband-level filtering mode. A state "0" of the bit may indicate the subband-level filtering mode, and a state "1" of the bit may indicate the non-subband-level filtering mode. Alternatively, a state "0" of the bit may indicate the non-subband-level filtering mode, and a state "1" of the bit may indicate the subband-level filtering mode. In another example, the second indication information may occupy two bits. For example, for content indicated by the second indication information, refer to Table 1.

**Table 1**

| Bit state of the second indication information | Indication content |
|---|---|
| 00 | Transmit subband-level filtering and receive non-subband-level filtering |
| 01 | Transmit subband-level filtering and receive subband-level filtering |
| 10 | Transmit non-subband-level filtering and receive subband-level filtering |
| 11 | Transmit non-subband-level filtering and receive non-subband-level filtering |

The second indication information may be carried in one or more fields of radio resource control (radio resource control, RRC) signaling, media access control control element (media access control control element, MAC CE) signaling, downlink control information (downlink control information, DCI) signaling, or the like. The one or more fields may be one or more fields defined in the RRC signaling, one or more fields defined in the MAC CE signaling, or one or more fields defined in the DCI signaling, or may be one or more newly defined RRC fields, MAC CE fields, or DCI fields. This is not limited in this embodiment of this application. Certainly, the second indication information may alternatively be carried in newly defined signaling.

In an alternative implementation, the terminal device may alternatively autonomously determine whether to determine the first bandwidth. For example, the terminal device may determine, based on configuration information sent by the network device, whether to determine the first bandwidth. The configuration information may include a time division duplexing configuration configured by the network device for the terminal device. For example, if the time division duplexing configuration configured by the network device for the terminal device is a subband-level configuration, the terminal device determines the first bandwidth in an SBFD slot. If the time division duplexing configuration is at the CC level, the terminal device does not need to determine the first bandwidth. A correspondence between a time division duplexing configuration and a filtering mode may be agreed on in advance, so that the terminal device may determine a to-be-used filtering mode based on the time division duplexing configuration and the correspondence, to determine whether to determine the first bandwidth. For example, if the time division duplexing configuration is at the subband level, the time division duplexing configuration corresponds to the first filtering mode; or if the time division duplexing configuration is at the CC level, the time division duplexing configuration corresponds to a second filtering mode.

It should be understood that, because the terminal device may determine, based on the time division duplexing configuration configured by the network device, whether to determine the first bandwidth, S802 is an optional step, and therefore is illustrated by a dashed line in FIG. 8.

It may be understood that the terminal device may support one or more filter bandwidths. The filter bandwidth supported by the terminal device varies with a capability of the terminal device. The first bandwidth should fall within the one or more filter bandwidths supported by the terminal device. The first signal is sent on the first time-frequency resource, and the first bandwidth should be a minimum filter bandwidth greater than a third bandwidth. The third bandwidth may be a bandwidth occupied by the first subband in the BWP, may be a bandwidth occupied by the first subband in the CC, or may be a bandwidth occupied by a channel carrying the first signal. Otherwise, the first signal is damaged. The terminal device may determine the first bandwidth based on the supported filter bandwidth and the third bandwidth. For example, to reduce, as much as possible, interference to another terminal device that is caused by the sending of the first signal by the terminal device, the first bandwidth may be a minimum filter bandwidth that is in the filter bandwidth supported by the terminal device and that is greater than or equal to the third bandwidth. In embodiments of this application, a specific implementation of the third bandwidth includes one or more of the following, and a specific implementation to be used is not limited in embodiments of this application.

In an implementation A1, the third bandwidth is the bandwidth occupied by the uplink channel carrying the first signal. Correspondingly, the first bandwidth may be the minimum filter bandwidth that is in the filter bandwidth supported by the terminal device and that is greater than or equal to the third bandwidth. Because the first bandwidth is the minimum filter bandwidth greater than or equal to the bandwidth occupied by the uplink channel carrying the first signal, interference from the first signal to a terminal device that receives a signal in another subband can be reduced to a large extent.

In an implementation A2, the third bandwidth is the bandwidth occupied by the first subband in the BWP. Correspondingly, the first bandwidth may be a minimum filter bandwidth that is in the filter bandwidth supported by the terminal device and that is greater than or equal to the bandwidth occupied by the first subband in the BWP. In this implementation, interference from the first signal to a terminal device that receives a signal in another subband can be reduced to a large extent, and the terminal device does not need to frequently switch the bandwidth of the filter. To be specific, a quantity of times of switching the bandwidth by the filter can be reduced, to reduce processing complexity of the terminal device.

In an implementation A3, the third bandwidth is the bandwidth occupied by the first subband in the CC, in other words, the third bandwidth is the first subband. Correspondingly, the first bandwidth is a minimum filter bandwidth that is in the filter bandwidth supported by the terminal device and that is greater than or equal to the bandwidth occupied by the first subband in the CC. In this implementation, interference from the first signal to a terminal device that receives a signal in another subband can be reduced to a large extent, and a quantity of times of switching the bandwidth by the filter can be reduced, to reduce processing complexity of the terminal device.

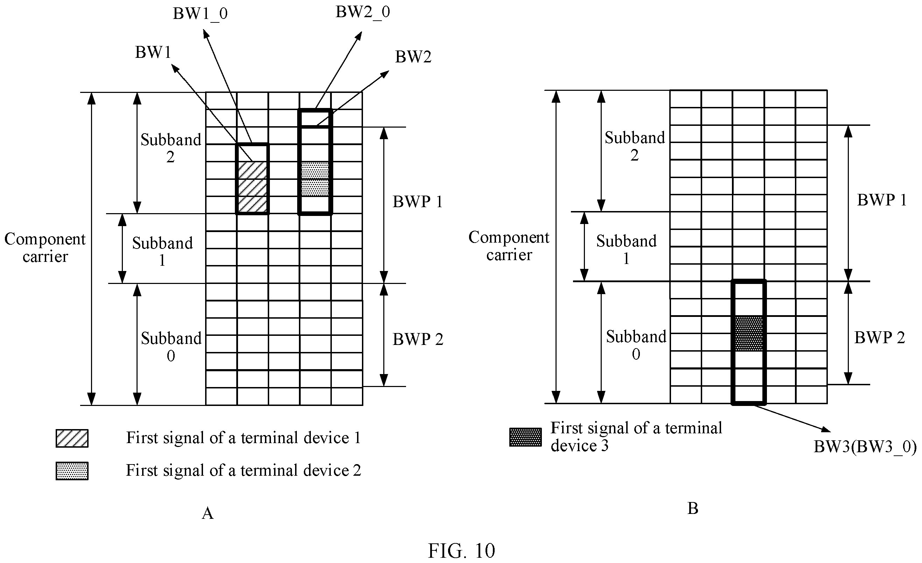

For ease of understanding, FIG. 10 is a schematic diagram of time-frequency resources occupied by a plurality of terminal devices to send first signals. FIG. 10 uses an example in which a frequency domain resource is one CC. The CC includes three subbands, namely, a subband 0, a subband 1, and a subband 2 in FIG. 10. FIG. 10 uses an example in which a terminal device 1, a terminal device 2, and a terminal device 3 send a first signal. As shown in A in FIG. 10, for the terminal device 1, the third bandwidth is a bandwidth occupied by an uplink channel carrying the first signal, namely, BW1, and a minimum filter bandwidth supported by the terminal device 1 is BW1_0. In this case, the terminal device 1 may determine that the first bandwidth is BW1_0. To be specific, the first bandwidth is a minimum filter bandwidth that is in a filter bandwidth supported by the terminal device 1 and that is greater than or equal to BW1. Similarly, for the terminal device 2, the third bandwidth is a bandwidth occupied by a first subband in a BWP, namely, BW2, and a minimum filter bandwidth supported by the terminal device 2 is BW2_0. In this case, the terminal device 2 may determine that the first bandwidth is BW2_0. To be specific, the first bandwidth is a minimum filter bandwidth that is in a filter bandwidth supported by the terminal device 2 and that is greater than or equal to BW2. As shown in B in FIG. 10, for the terminal device 3, the third bandwidth is a bandwidth occupied by a first subband in the CC, namely, BW3, and a minimum filter bandwidth supported by the terminal device 3 is BW3_0. In this case, the terminal device 3 may determine that the first bandwidth is BW3_0. To be specific, the first bandwidth is a minimum filter bandwidth that is in a filter bandwidth supported by the terminal device 3 and that is greater than or equal to BW3.

It may be understood that the second bandwidth may be a minimum filter bandwidth that is in the filter bandwidth supported by the terminal device and that is greater than or equal to a bandwidth occupied by a second subband. The second subband is a frequency domain resource corresponding to a time-frequency resource on which a second signal is located. The second bandwidth is similar to the first bandwidth. For example, the second bandwidth is a minimum filter bandwidth greater than or equal to a fourth bandwidth. Similar to the third bandwidth, the fourth bandwidth also has three implementations similar to the foregoing A1 to A3. To be specific, in an implementation A1, the fourth bandwidth is a bandwidth occupied by a downlink channel carrying the second signal. In an implementation A2, the fourth bandwidth is a bandwidth occupied by the second subband in the BWP. In an implementation A3, the fourth bandwidth is a bandwidth occupied by the second subband in the CC.

After determining the first bandwidth, the terminal device further needs to determine the center frequency of the filter and a position of the first bandwidth in the CC. In embodiments of this application, a specific implementation of the center frequency of the filter may include one or more of the following, and a specific implementation to be used is not limited in embodiments of this application.

In an implementation B1, the center frequency of the filter may be a center position of the bandwidth occupied by the uplink channel carrying the first signal.

In an implementation B2, the center frequency of the filter may be a center position of the bandwidth occupied by the first subband in the BWP.

Corresponding center frequencies may be respectively determined for different transmission directions in the BWP. If the first subband belongs to a plurality of subbands in a same transmission direction in the BWP, the first subband may be a subband with a largest number (or index) in the plurality of subbands. Alternatively, the first subband may be a subband with a smallest number (or index) in the plurality of subbands.

In an implementation B3, the center frequency of the filter may be a center position of the bandwidth occupied by the first subband in the CC.

Corresponding center frequencies may be respectively determined for different transmission directions in the BWP. If the first subband belongs to a plurality of subbands in a same transmission direction in the BWP, the first subband may be a subband with a largest number (or index) in the plurality of subbands. Alternatively, the first subband may be a subband with a smallest number (or index) in the plurality of subbands.

In an implementation B4, the center frequency of the filter may alternatively be a center position of the active BWP of the terminal device or a center position of the CC.

In an implementation B5, the center frequency of the filter is a center position of a third subband in the BWP, or is a center position of a bandwidth occupied by a third subband on the first time-frequency resource. The third subband may be a subband with a smallest number (or index) in subbands included in the BWP, a subband with a largest number (or index) in the subbands included in the BWP, or an intermediate subband in the plurality of subbands included in the BWP.

In an implementation B6, the at least two subbands are two subbands, for example, the first subband and the second subband. The center frequency of the filter may be a frequency domain position at which the first subband is adjacent to the second subband, namely, a frequency domain position of a boundary at which the first subband and the second subband intersect.

It should be noted that, when the bandwidth occupied by the first subband is implemented in any one of the foregoing implementations A1 to A3, the center frequency of the filter may be any one of the foregoing implementations B 1 to B6.

In a possible scenario, the frequency domain resource corresponding to the first time-frequency resource includes the plurality of subbands, in other words, the terminal device may send the first signal in the plurality of subbands. In this scenario, for each subband, the center frequency of the filter may be any one of the foregoing implementations B1 to B6.

Considering that the third bandwidth may have an intersection with the BWP, in this case, if a center position of a bandwidth occupied by the first signal is used as the center frequency of the filter, the center frequency of the filter needs to be switched. This increases the processing complexity of the terminal device. Specific related content is described in the following. If the center frequency of the filter may alternatively be the center position of the active BWP of the terminal device, the center frequency does not vary with the bandwidth occupied by the first signal. In other words, the terminal device does not need to switch the center frequency of the filter, so that the processing complexity of the terminal device can be reduced. The following sequentially describes a manner of determining the center frequency of the filter and a manner of determining a frequency position of the first bandwidth.

Considering the switching of the center frequency of the filter, the terminal device may select the center frequency in the implementation B4, B5, or B6 as the center frequency of the filter. In this case, the filter does not need to switch the center frequency, to reduce impact caused by switching duration. Considering a change of a frequency of the bandwidth of the filter, the terminal device may select the first bandwidth in the implementation A2 or A3. This can reduce a possibility that the frequency of the bandwidth of the filter changes. To reduce the complexity of the terminal device, the implementation B2 or B3 may be selected to determine the center frequency, and the first bandwidth in the implementation A2 is selected. In this case, a filter design of the terminal device may be used without changing.

For the three implementations of the third bandwidth, the frequency position of the first bandwidth may have the following several possible implementations.

In an implementation C1, a lowest frequency of the first bandwidth is a lowest frequency of the third bandwidth. To be specific, with reference to the lowest frequency of the third bandwidth, a minimum filter bandwidth that is in the filter bandwidth supported by the terminal device and that is greater than or equal to the third bandwidth is determined as the first bandwidth. This implementation can reduce, as much as possible, interference to a high-frequency subband adjacent to the first subband that is caused by sending of the first subband.

In an implementation C2, a highest frequency of the first bandwidth is a highest frequency of the third bandwidth. To be specific, with reference to the highest frequency of the third bandwidth, a minimum filter bandwidth that is in the filter bandwidth supported by the terminal device and that is greater than or equal to the third bandwidth is determined as the first bandwidth. This implementation can reduce, as much as possible, interference to a low-frequency subband adjacent to the first subband that is caused by sending of the first subband.

In an implementation C3, a center frequency of the first bandwidth is a center frequency of the third bandwidth. To be specific, with reference to the center frequency of the third bandwidth, a minimum filter bandwidth that is in the filter bandwidth supported by the terminal device and that is greater than or equal to the third bandwidth is determined as the first bandwidth. This implementation can reduce, as much as possible, interference to a subband adjacent to the first subband that is caused by sending of the first subband.

In an implementation C4, a lowest frequency of the first bandwidth is less than or equal to a lowest frequency of the third bandwidth, and a highest frequency of the first bandwidth is greater than or equal to a highest frequency of the third bandwidth.

In an implementation C5, a distance between a center frequency of the first bandwidth and a center frequency of a subband adjacent to the first subband is the largest. When there is one subband adjacent to the first subband, one of the implementations C1, C2, and C3 may be used, where a distance between a center frequency of the first bandwidth in the form and a center frequency of the subband adjacent to the first subband is the largest. When there are a plurality of subbands adjacent to the first subband, one of the implementations C1, C2, and C3 may be used, where a smallest value in a plurality of distances between a center frequency of the first bandwidth in the form and center frequencies of the plurality of adjacent subbands may represent a distance between the center frequency of the first bandwidth in the form and the center frequency of the subband adjacent to the first subband. The implementation C1, C2, or C3 corresponding to the largest distance is used in the implementation C5.

It should be understood that similar to the frequency position of the first bandwidth, a frequency position of the second bandwidth may also have implementations similar to the foregoing implementations C1 to C5. Details are not described herein again.

The center frequency of the filter and the frequency position of the first bandwidth may affect interference that is caused by the sending of the first signal and that is to information transmitted in a remaining subband, or affect the processing complexity of the terminal device. In addition, considering that a bandwidth occupied by the second signal received in the subband adjacent to the first subband, the frequency position of the first bandwidth also varies. For ease of understanding, the following describes a relationship between the first bandwidth of the filter, the center frequency of the filter, and the frequency position of the first bandwidth with reference to specific scenarios. It should be noted that, in the following scenarios, the first bandwidth of the filter is specific to a time period T, namely, the SBFD slot. For a time period T', the center frequency of the filter is a center frequency of the BWP, and the bandwidth of the filter is a bandwidth that is closest to the BWP and that is supported by the terminal device (in other words, the bandwidth and the center frequency of the filter in the time period T' are determined based on an existing BWP filtering mode). In the following scenarios, an example in which a bandwidth of the receive filter is the second bandwidth is used.

Scenario 1: The center frequency of the filter is the center position of the active BWP of the terminal device. The first bandwidth may be determined based on the implementation A1, A2, or A3 of the third bandwidth. The frequency position of the first bandwidth may be determined based on any one of the foregoing implementations C1 to C5, to reduce interference from the first signal to second signal as much as possible. Similarly, the second bandwidth may be determined based on the implementation A1, A2, or A3 of the fourth bandwidth. The frequency position of the second bandwidth may be determined in any one of the foregoing implementations C1 to C5. It should be noted that the specific implementation of the occupied third bandwidth may be the same as or different from a specific implementation of the occupied fourth bandwidth. A specific implementation of the frequency position of the first bandwidth may be the same as or different from a specific implementation of the frequency position of the second bandwidth.

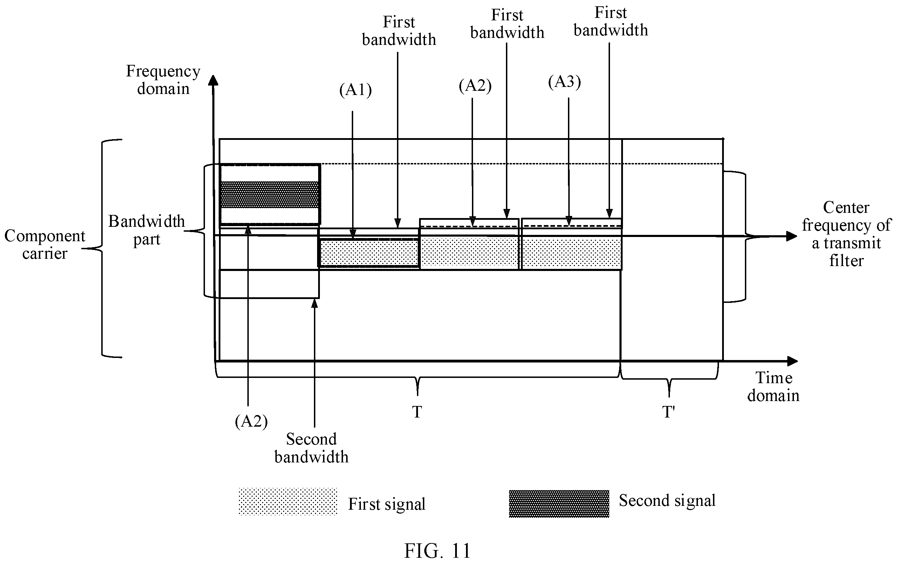

FIG. 11 is a first schematic diagram of sending the first signal and receiving the second signal by the terminal device. In FIG. 11, the terminal device sends the first signal on a subband-level frequency domain resource, and receives the second signal on a subband-level frequency domain resource. The terminal device filters the first signal in the subband-level filtering mode, and filters the received second signal in the non-subband-level filtering mode. If the center frequency of the filter is the center position of the active BWP of the terminal device, the third bandwidth may be in any one of the foregoing three implementations. For example, in FIG. 11, the first bandwidth may be determined based on the implementation A1, A2, or A3 of the third bandwidth. The frequency position of the first bandwidth may be determined based on the foregoing implementation B1. It may be understood that a size and the frequency position of the first bandwidth in FIG. 11 can reduce, as much as possible, interference to another subband adjacent to the first subband that is caused by the sending of the first signal. The terminal device filters the second signal in the non-subband-level filtering mode. In a possible implementation, the terminal device filters the received second signal in the BWP-level filtering mode. In another possible implementation, the implementation of the fourth bandwidth is A2, a center frequency of the receive filter is a center frequency in the transmit subband-level filtering, and a center frequency of the second bandwidth is a position of the center frequency in the transmit subband-level filtering. The second bandwidth is a minimum filter bandwidth that is in the filter bandwidth supported by the terminal device and that is greater than or equal to the bandwidth occupied by the second subband in the BWP, and meets a constraint of a position of the center frequency of the second bandwidth.

The second bandwidth may be determined based on the implementation A2 of the fourth bandwidth. For example, in FIG. 11, the fourth bandwidth is the bandwidth occupied by the second subband in the BWP. The frequency position of the second bandwidth may be similar to the implementation C1 of the frequency position of the first bandwidth, in other words, a lowest frequency of the second bandwidth is a lowest frequency of the fourth bandwidth.

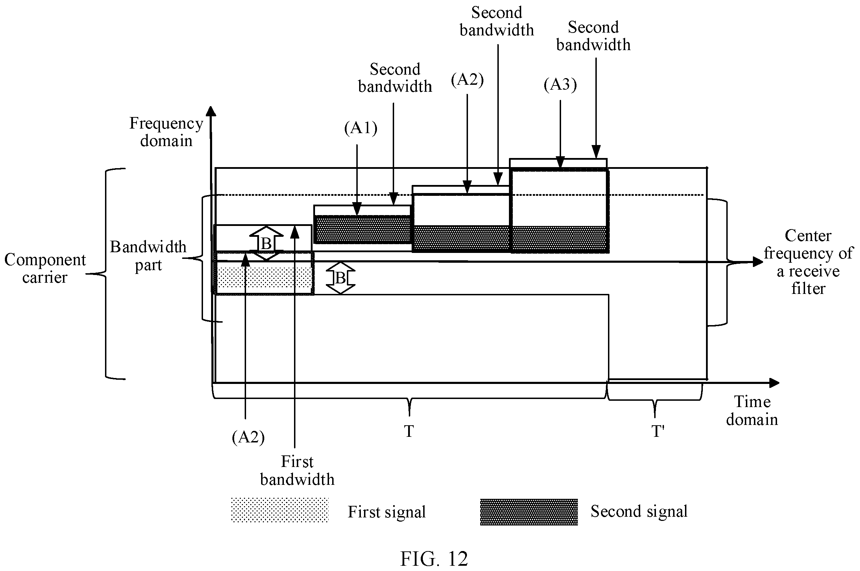

FIG. 12 is a second schematic diagram of sending the first signal and receiving the second signal by the terminal device. A difference of FIG. 12 lies in that the terminal device applies the non-subband-level filtering to the transmit filter, and applies the subband-level filtering to the receive filter. In this scenario, the fourth bandwidth may be in any one of the foregoing three implementations. For example, in FIG. 12, the second bandwidth may be determined based on the implementation A1, A2, or A3 of the fourth bandwidth. The frequency position of the second bandwidth may be determined based on any one of the foregoing implementations C1 to C5, to reduce interference from the first signal to the second signal as much as possible. The first bandwidth may be a bandwidth that is closest to the BWP and that is supported by the terminal device. For example, in FIG. 12, the third bandwidth is the bandwidth occupied by the first subband in the BWP. The frequency position of the first bandwidth may be determined in the foregoing implementation C2 or C3. If the frequency position of the first bandwidth is determined in the implementation C2, a center frequency of the second bandwidth may be the same as the center frequency of the first bandwidth. It may be understood that a size and the frequency position of the first bandwidth in FIG. 12 can reduce, as much as possible, interference to another subband adjacent to the first subband that is caused by the sending of the first signal. The terminal device filters the second signal in the non-subband-level filtering mode. In a possible implementation, the terminal device filters the received second signal in the BWP-level filtering mode. In another possible implementation, the implementation of the fourth bandwidth is A2, a center frequency of the receive filter is a center frequency in the transmit subband-level filtering, and the center frequency of the second bandwidth is a position of the center frequency in the transmit subband-level filtering. The second bandwidth is a minimum filter bandwidth that is in the filter bandwidth supported by the terminal device and that is greater than or equal to the bandwidth occupied by the second subband in the BWP, and meets a constraint of a position of the center frequency of the second bandwidth.

Scenario 2: The center frequency of the filter may be a center of an intersection between the first subband or the second subband and the BWP. The first bandwidth may be determined based on the implementation A1, A2, or A3 of the third bandwidth. The frequency position of the first bandwidth may be determined based on the foregoing implementation B 1 or B2, to reduce interference from the first subband to the second subband as much as possible. Similarly, the second bandwidth may be determined based on the implementation A1, A2, or A3 of the fourth bandwidth. The frequency position of the second bandwidth may be determined based on the foregoing implementation B1 or B2. It should be noted that the specific implementation of the third bandwidth may be the same as or different from a specific implementation of the fourth bandwidth. A specific implementation of the frequency position of the first bandwidth may be the same as or different from a specific implementation of the frequency position of the second bandwidth.

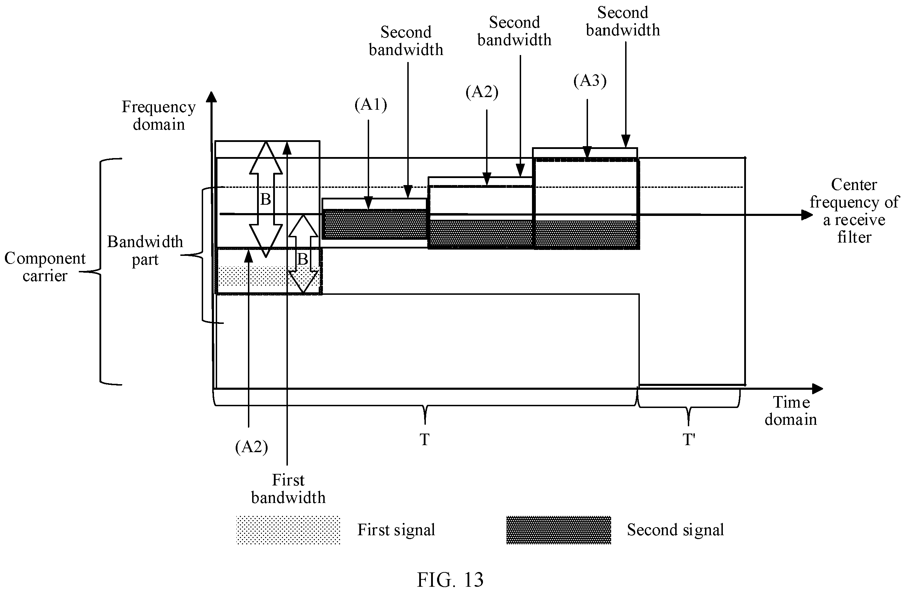

FIG. 13 is a third schematic diagram of sending the first signal and receiving the second signal by the terminal device. A difference from FIG. 12 lies in that the center frequency of the filter is a center position of the bandwidth occupied by the first subband or the second subband in the BWP, namely, the center of the intersection between the first subband or the second subband and the BWP. In this scenario, the fourth bandwidth may be in any one of the foregoing three implementations. For example, in FIG. 13, the second bandwidth may be determined based on the implementation A1, A2, or A3 of the fourth bandwidth. The frequency position of the second bandwidth may be determined based on the foregoing implementation B1 or B2, to reduce interference from the first subband to the second subband as much as possible. The first bandwidth may be a bandwidth that is closest to the BWP and that is supported by the terminal device. For example, in FIG. 13, the first bandwidth may be the bandwidth occupied by the first subband in the BWP. The frequency position of the first bandwidth may be determined in the implementation B3. If the frequency position of the first bandwidth is determined in the implementation B2, a center frequency of the second bandwidth may be the same as the center frequency of the first bandwidth.

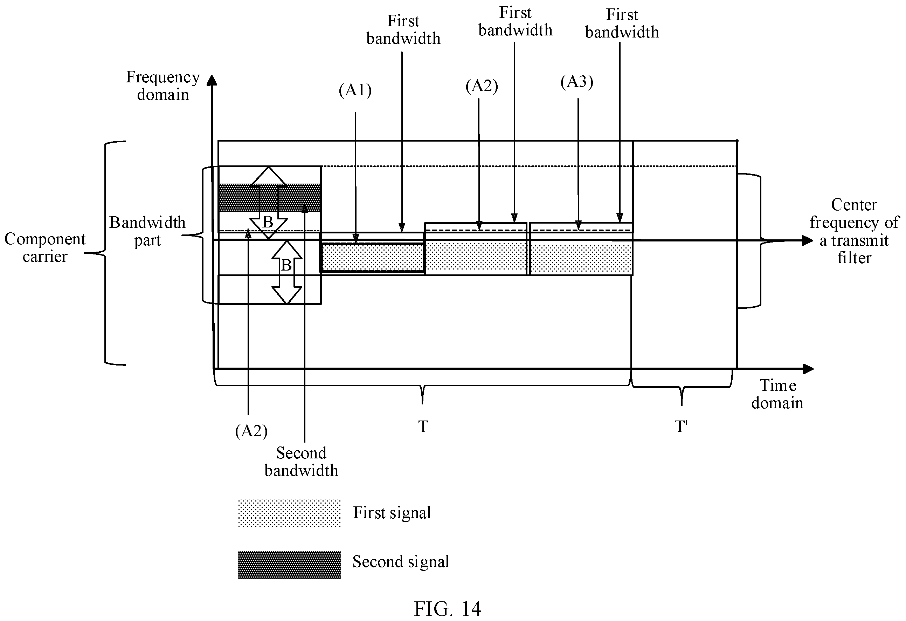

FIG. 14 is a fourth schematic diagram of sending the first signal and receiving the second signal by the terminal device. A difference from FIG. 13 lies in that the terminal device sends the first subband on a subband-level frequency domain resource, and receives the second subband on a BWP-level frequency domain resource. In this scenario, the third bandwidth may be in any one of the foregoing three implementations. For example, in FIG. 14, the first bandwidth may be determined based on the implementation A1, A2, or A3 of the third bandwidth. The frequency position of the first bandwidth may be determined based on the foregoing implementation B1 or B2, to reduce interference from the first subband to the second subband as much as possible. The second bandwidth may be a bandwidth that is closest to the BWP and that is supported by the terminal device. For example, in FIG. 13, the second bandwidth is the bandwidth occupied by the second subband in the BWP. The frequency position of the second bandwidth may be determined in the foregoing implementation B3.

Scenario 3: A center frequency of the transmit filter may be the center position of the bandwidth occupied by the uplink channel carrying the first signal. In this case, the first bandwidth may be determined based on the implementation A1, A2, or A3 of the third bandwidth. The frequency position of the first bandwidth may be determined based on the foregoing implementation B5, so that the center frequency of the first bandwidth is farthest from a center frequency of an adjacent subband that is in a different transmission direction, to reduce interference from the first subband to the second subband as much as possible. The second bandwidth may be determined based on the implementation A1, A2, or A3 of the fourth bandwidth. The frequency position of the second bandwidth may be determined based on the foregoing implementation B5, so that a center frequency of the second bandwidth is farthest from a center frequency of an adjacent subband that is in a different transmission direction, to reduce the interference from the first subband to the second subband as much as possible.

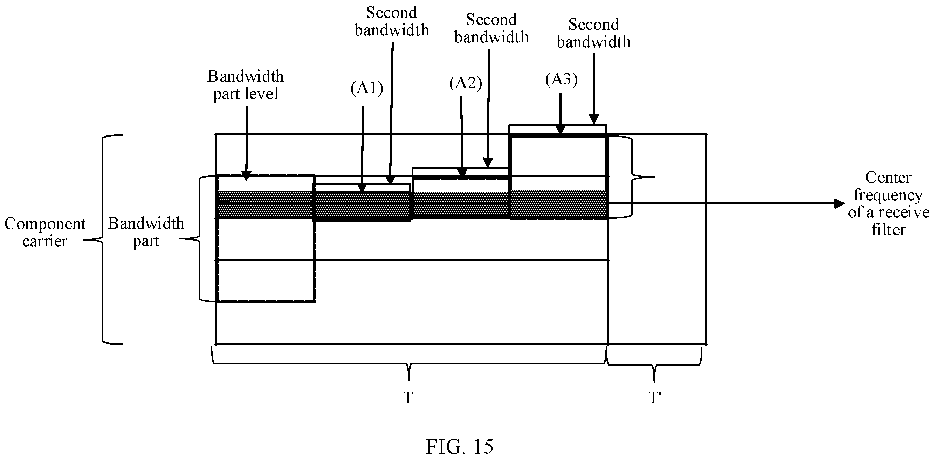

FIG. 15 is a fifth schematic diagram of sending the first signal and receiving the second signal by the terminal device. FIG. 15 uses an example in which the second bandwidth and a center frequency of the receive filter are determined. In FIG. 15, the second bandwidth may be determined based on the implementation A1, A2, or A3 of the fourth bandwidth. The frequency position of the second bandwidth may be determined based on the foregoing implementation B1. A center frequency of the second bandwidth may be a center position of the fourth bandwidth. It should be understood that the first bandwidth of the transmit filter, and the center frequency and the frequency position of the first bandwidth are the same as specific implementations of the second bandwidth. Details are not described herein again.

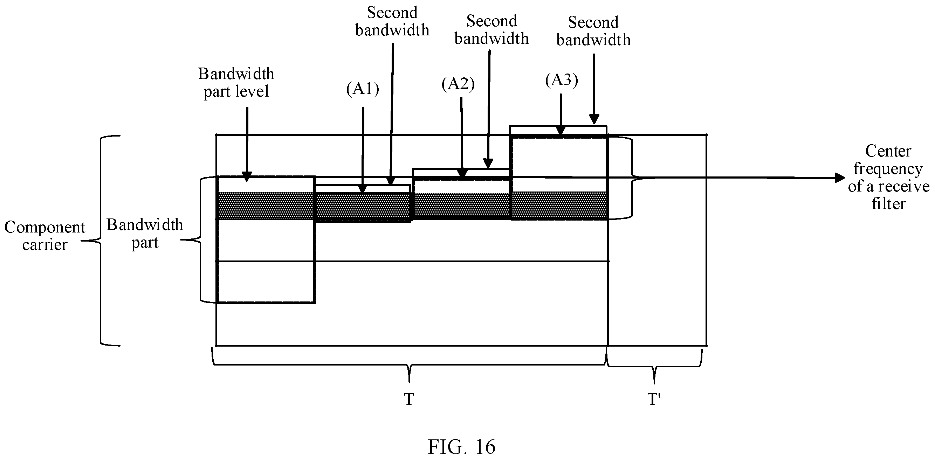

FIG. 16 is a sixth schematic diagram of sending the first signal and receiving the second signal by the terminal device. A difference from FIG. 15 lies in that a center frequency of the second bandwidth may be a frequency position that is farthest from a center frequency of an adjacent subband that is in a different transmission direction, to reduce interference from the first subband to the second subband as much as possible.

Transmission of the first signal in a frequency hopping manner is not considered in the foregoing three implementations of the bandwidth occupied by the first subband. In a possible scenario, the first signal is sent in the frequency hopping manner. In this scenario, the third bandwidth further needs to be determined with reference to a time interval T3 between an n^{th} hop and an (n+1)^{th} hop of the first signal and the switching duration T of the terminal device. Assuming that the time interval T3 between the n^{th} hop and the (n+1)^{th} hop of the first signal is less than the switching duration T of the terminal device, it is clear that the first signal cannot be sent in a limited period of time. Therefore, in a frequency-hopping transmission scenario, if the third bandwidth may include bandwidths occupied by the n^{th} hop and the (n+1)^{th} hop of the first signal, in other words, if T3 is less than T, the bandwidth occupied by the channel carrying the first signal is bandwidths occupied by a channel carrying the n^{th} hop of the first signal and a channel carrying the (n+1)^{th} hop of the first signal. The bandwidth occupied by the first subband in the BWP is bandwidths, in the BWP, occupied by a subband in which the channel carrying the n^{th} hop of the first signal is located and a subband in which the channel carrying the (n+1)^{th} hop of the first signal is located. The bandwidth occupied by the first subband in the CC is bandwidths, in the CC, occupied by the subband in which the channel carrying the n^{th} hop of the first signal is located and the subband in which the channel carrying the (n+1)^{th} hop of the first signal is located. On the contrary, if T3 is greater than or equal to T, the third bandwidth may include the bandwidth occupied by the n^{th} hop of the first signal and/or the bandwidth occupied by the (n+1)^{th} hop of the first signal. For example, the bandwidth occupied by the channel carrying the first signal may be the bandwidth occupied by the channel carrying the n^{th} hop or the (n+1)^{th} hop of the first signal. The bandwidth occupied by the first subband in the BWP is the bandwidth, in the BWP, occupied by the subband in which the channel carrying the n^{th} hop or the (n+1)^{th} hop of the first signal is located. The bandwidth occupied by the first subband in the CC is the bandwidth, in the CC, occupied by the subband in which the channel carrying the n^{th} hop or the (n+1)^{th} hop of the first signal is located.

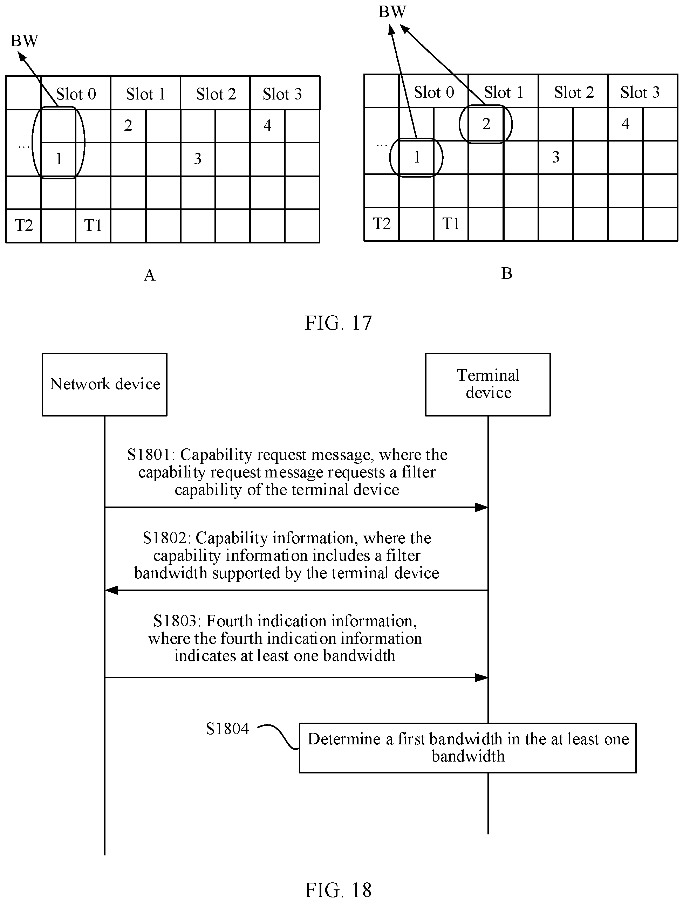

For example, FIG. 17 is a schematic diagram of sending the first signal in the frequency hopping manner. In FIG. 17, the first hop of the first signal is sent in a slot 0, the second hop of the first signal is sent in a slot 1, and the rest can be deduced by analogy. A in FIG. 17 shows that T1 is less than T2, and BW is bandwidths occupied by an n^{th} hop and an (n+1)^{th} hop of the first signal. B in FIG. 17 shows that T1 is greater than or equal to T2, and BW is a bandwidth occupied by an n^{th} hop or an (n+1)^{th} hop of the first signal.

S803: The terminal device filters the first signal through the filter with the first bandwidth.

S804: The terminal device sends the filtered first signal to the network device. Correspondingly, the network device receives the filtered first signal from the terminal device.

The terminal device may filter the first signal after determining the first bandwidth and the center frequency and the frequency position of the filter. Because the first bandwidth is determined based on the bandwidth occupied by the first signal, when the bandwidth occupied by the first signal is at the subband level, the first bandwidth is also at the subband level, to reduce or avoid the leakage of the first signal to the subband adjacent to the first subband, in other words, reduce or avoid the CLI between terminal devices.

It should be noted that the procedure shown in FIG. 7 and the procedure shown in FIG. 8 may be combined with each other. If the procedures are combined, the terminal device needs to determine the first bandwidth in consideration of the switching duration T of the terminal device. Considering the switching duration T of the terminal device, the first bandwidth may be greater than or equal to the bandwidth occupied by the first subband in the BWP. In this case, the center frequency of the filter may be the center position of the bandwidth occupied by the first subband in the BWP, or is the center position of the active BWP of the terminal device. Regardless of which center frequency of the filter is used by the terminal device, a requirement for reducing a quantity of times of switching the center frequency and/or the bandwidth by the filter can be met, to reduce the processing complexity of the terminal device.

In the procedure shown in FIG. 8, the first bandwidth is determined in all the filter bandwidths supported by the terminal device. In an alternative solution, the terminal device may determine the first bandwidth in a part of the supported filter bandwidths. Considering the switching duration of the filter, to reduce the switching duration of the filter, the network device may determine at least one bandwidth based on the capability of the terminal device, and the terminal device may determine the first bandwidth in the at least one bandwidth.

FIG. 18 is a schematic flowchart of a third communication method according to an embodiment of this application.

S1801: A network device sends a capability request message to a terminal device. Correspondingly, the terminal device receives the capability request message from the network device. The capability request message requests a filter capability of the terminal device.

S1802: The terminal device sends capability information to the terminal device. Correspondingly, the network device receives the capability information from the terminal device. The capability information includes a filter bandwidth supported by the terminal device.

It may be understood that the filter bandwidth supported by the terminal device varies with the capability of the terminal device. The network device may determine at least one bandwidth based on the capability of the terminal device. For example, the network device may request to obtain the filter capability of the terminal device, for example, the filter bandwidth supported by the terminal device. The terminal device receives the capability request message sent by the network device, and may send the capability information to the network device in response to the capability request message. The capability information may include the filter bandwidth supported by the terminal device. In some embodiments, the capability information may further include other information, for example, switching duration of the terminal device. The network device receives the capability information sent by the terminal device, and determines the at least one bandwidth.

The switching duration of the terminal device varies with a filter parameter. For example, if a center frequency of a filter changes, the switching duration of the terminal device is long. If another parameter of the filter changes, the switching duration of the terminal device is short. The switching duration of the terminal device included in the capability information may be longest duration corresponding to switching of a plurality of filter parameters. Alternatively, the switching duration of the terminal device included in the capability information may be switching duration respectively corresponding to various filter parameters.

S1803: The network device sends fourth indication information to the terminal device. Correspondingly, the terminal receives the fourth indication information from the network device.

The fourth indication information may indicate the at least one bandwidth. The at least one bandwidth may be considered as a part of filter bandwidths supported by the terminal device. This may also be understood as: The at least one bandwidth is at least one filter bandwidth available to the terminal device. The fourth indication information may include an index of the at least one bandwidth. For example, a correspondence between a filter bandwidth and an index may be specified in a protocol. The network device may determine the index of the at least one bandwidth based on the correspondence. The fourth indication information may be carried in one or more fields in RRC signaling, MAC CE signaling, DCI signaling, or the like. The one or more fields may be one or more fields defined in the RRC signaling, one or more fields defined in the MAC CE signaling, or one or more fields defined in the DCI signaling, or may be one or more newly defined RRC fields, MAC CE fields, or DCI fields. This is not limited in this embodiment of this application. Certainly, the fourth indication information may alternatively be carried in newly defined signaling.

S1804: The terminal device determines a first bandwidth in the at least one bandwidth.

The terminal device receives the fourth indication information, and determines the first bandwidth in the at least one bandwidth indicated by the fourth indication information. A manner in which the terminal device determines the first bandwidth in the at least one bandwidth is the same as a manner in which the terminal device determines the first bandwidth in the supported filter bandwidth. For details, refer to related content in S801. The details are not described herein again. After performing S1804, the terminal device may further perform S803 and S804. Details are not described herein again.

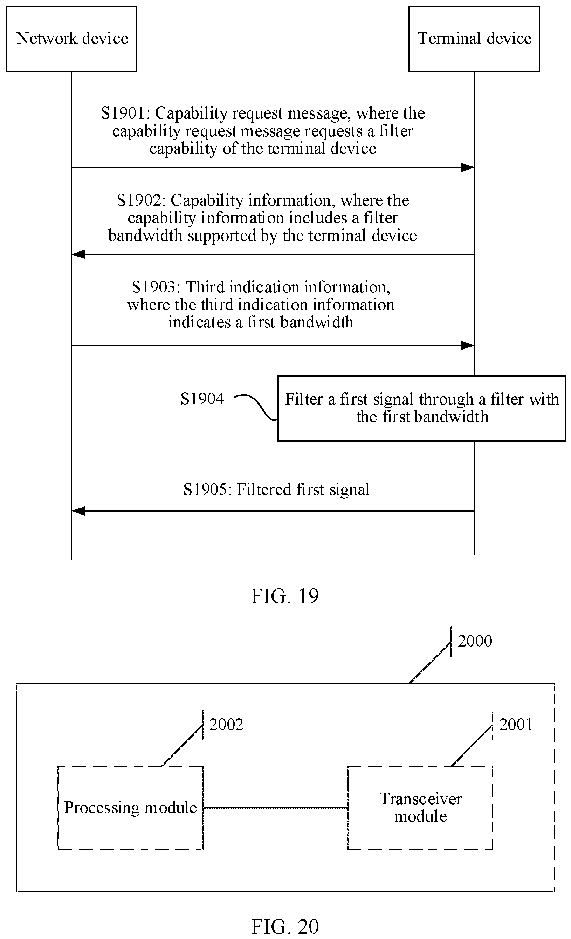

The procedures shown in FIG. 8 and FIG. 18 use an example in which the terminal device autonomously determines the first bandwidth. In an alternative solution, the first bandwidth may be determined by the network device and notified to the terminal device. Because the terminal device does not need to determine the first bandwidth, processing complexity of the terminal device can be reduced. For example, FIG. 19 is a schematic flowchart of a fourth communication method according to an embodiment of this application. A procedure shown in FIG. 19 uses an example in which a terminal device sends a first signal on a first time-frequency resource.

S1901: A network device sends a capability request message to the terminal device. Correspondingly, the terminal device receives the capability request message from the network device. The capability request message requests a filter capability of the terminal device.

S1902: The terminal device sends capability information to the terminal device. Correspondingly, the network device receives the capability information from the terminal device. The capability information includes a filter bandwidth supported by the terminal device.

For specific implementations of S1901 and S1902, refer to the specific implementations of S1801 and S1802. Details are not described herein again.

S1903: The network device sends third indication information to the terminal device. Correspondingly, the terminal device receives the third indication information from the network device. The third indication information indicates a first bandwidth.

The network device learns of the first time-frequency resource to be used by the terminal device to send the first signal, so that the first bandwidth that should be used by the terminal device can be determined. For example, if a frequency domain resource corresponding to the first time-frequency resource is a subband, the network device may determine that the terminal device should send the first signal in a subband-level filtering mode. In this case, the network device may determine the first bandwidth in the foregoing manner in which the terminal device determines the first bandwidth in the supported filter bandwidth. For details, refer to related content in S801. The details are not described herein again.

After determining the first bandwidth, the network device may send, to the terminal device, the third indication information indicating the first bandwidth. For example, the third indication information includes an index of the first bandwidth. The terminal device receives the third indication information, and may determine the first bandwidth based on the index included in the third indication information. The third indication information may be carried in one or more fields in RRC signaling, MAC CE signaling, DCI signaling, or the like. The one or more fields may be one or more fields defined in the RRC signaling, one or more fields defined in the MAC CE signaling, or one or more fields defined in the DCI signaling, or may be one or more newly defined RRC fields, MAC CE fields, or DCI fields. This is not limited in this embodiment of this application. Certainly, the third indication information may alternatively be carried in newly defined signaling.

S1904: The terminal device filters the first signal through a filter with the first bandwidth.

S1905: The terminal device sends the filtered first signal to the network device. Correspondingly, the network device receives the filtered first signal from the terminal device.

For specific implementations of S1904 and S1905, refer to the specific implementations of S803 and S804. Details are not described herein again.

The methods provided in embodiments of this application are described from a perspective of interaction between the terminal device and the network device in the foregoing embodiments provided in this application. The steps performed by the network device may alternatively be separately implemented by different communication apparatuses. For example, a first apparatus is configured to generate first indication information, and a second apparatus is configured to send the first indication information. In other words, the first apparatus and the second apparatus jointly complete the steps performed by the network device in embodiments of this application. A specific division manner is not limited in this application. When a network architecture includes one or more distributed units (distributed units, DUs), one or more central units (central units, CUs), and one or more radio units (RUs), the steps performed by the network device may be separately implemented by the DU, the CU, and the RU. To implement functions in the methods provided in the foregoing embodiments of this application, the terminal device and the network device may include a hardware structure and/or a software module, to implement the foregoing functions in a form of a hardware structure, a software module, or a combination of the hardware structure and the software module. Whether a function in the foregoing functions is performed by the hardware structure, the software module, or the combination of the hardware structure and the software module depends on particular applications and design constraints of the technical solutions.

An embodiment of this application further provides a communication apparatus. Communication apparatuses in embodiments of this application that are configured to implement the foregoing methods are described below with reference to the accompanying drawings.

FIG. 20 is a possible example block diagram of a communication apparatus in this application. The communication apparatus 2000 may correspondingly implement a function or a step implemented by the terminal device or the network device in the foregoing method embodiments. The communication apparatus may include a transceiver module 2001 and a processing module 2002. Optionally, the communication apparatus may further include a storage module. The storage module may be configured to store instructions (code or a program) and/or data. The transceiver module 2001 and the processing module 2002 may be coupled to the storage module. For example, the processing module 2002 may read the instructions (the code or the program) and/or the data in the storage module, to implement a corresponding method. The foregoing modules may be disposed independently, or may be partially or completely integrated.

It should be understood that the processing module 2002 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module 2002 may implement or execute various example logical blocks, modules, and circuits described with reference to content disclosed in this application. Alternatively, the processor may be a combination of processors implementing a computing function, for example, a combination of one or more microprocessors or a combination of a DSP and a microprocessor. The transceiver module 2001 is an interface circuit of the apparatus, and is configured to receive a signal from another apparatus. For example, when the apparatus is implemented in a form of a chip, the transceiver module 2001 is an interface circuit used by the chip to receive a signal from another chip or apparatus, or is an interface circuit used by the chip to send a signal to another chip or apparatus.

The communication apparatus 2000 may be the network device or the terminal device in the foregoing embodiments, or may be a chip used in the network device or the terminal device. For example, when the communication apparatus 2000 is the network device or the terminal device, the processing module 2002 may be, for example, a processor, and the transceiver module 2001 may be, for example, a transceiver. Optionally, the transceiver may include a radio frequency circuit, and the storage module may be, for example, a memory. For example, when the communication apparatus 2000 is the chip used in the network device or the terminal device, the processing module 2002 may be, for example, a processor, and the transceiver module 2001 may be, for example, an input/output interface, a pin, or a circuit. The processing module 2002 may execute computer-executable instructions stored in the storage unit. Optionally, the storage module is a storage unit, for example, a register or a buffer, in the chip. Alternatively, the storage module may be a storage unit, for example, a read-only memory (read-only memory, ROM), another type of static storage device that can store static information and instructions, or a random access memory (random access memory, RAM), that is in the network device, the terminal device, or a positioning management device and that is outside the chip.

In some possible implementations, the communication apparatus 2000 can correspondingly implement behavior and a function of the terminal device in the foregoing method embodiments. For example, the communication apparatus 2000 may be the terminal device, or may be a component (for example, a chip or a circuit) used in the terminal device. The transceiver module 2001 may be configured to support communication between the terminal device and another network entity, for example, support communication between the terminal device and the network device shown in FIG. 7, FIG. 8, FIG. 18, or FIG. 19. The processing module 2002 is configured to control and manage an action of the terminal device. For example, the processing module 2002 is configured to support the terminal device in performing all operations other than receiving and sending performed by the terminal device in FIG. 7, FIG. 8, FIG. 18, or FIG. 19.

In some embodiments, the transceiver module 2001 is configured to receive first indication information from the network device, where the first indication information indicates a first time interval. The first time interval is an interval between an end time point of a first signal and a start time point of a second signal. The processing module 2002 is configured to determine to receive or send the second signal at least after the first time interval elapses after the first signal. The first signal and the second signal are sent in a same BWP. A first filter parameter corresponding to the first signal is different from a second filter parameter corresponding to the second signal. The first time interval is related to switching duration of the terminal device, and the switching duration is duration needed for a filter of the terminal device to switch from the first filter parameter to the second filter parameter and for the terminal device to adapt to the second filter parameter.

In an optional implementation, that the first time interval is related to switching duration of the terminal device includes: The first time interval is greater than or equal to the switching duration T, or the first time interval is greater than or equal to a sum T' of the switching duration and first duration.

In an optional implementation, the transceiver module 2001 receives the second signal at least after the first time interval elapses after receiving the first signal. The first time interval is greater than or equal to T', and the first duration is processing duration T1 of the first signal.

In an optional implementation, the transceiver module 2001 sends the second signal at least after the first time interval elapses after receiving the first signal. The first time interval is greater than or equal to T', and the first duration is a sum of processing duration T1 of the first signal and preparation duration T2 of the second signal.

In an optional implementation, the transceiver module 2001 sends the second signal at least after the first time interval elapses after sending the first signal. The first time interval is greater than or equal to T', and the first duration is greater than or equal to 0.

In an optional implementation, the first indication information is carried in the first signal.

In some other embodiments, the processing module 2002 is configured to determine a first bandwidth of a filter, and filter a first signal on a first time-frequency resource through the filter. The first time-frequency resource belongs to a second time-frequency resource, and a time domain resource corresponding to the first time-frequency resource is the same as a time domain resource corresponding to the second time-frequency resource. A frequency domain resource corresponding to the second time-frequency resource includes at least two subbands, and transmission directions of the at least two subbands include an uplink transmission direction and a downlink transmission direction. A frequency domain resource corresponding to the first time-frequency resource is a first subband in the at least two subbands. The first bandwidth is greater than or equal to a bandwidth occupied by the first signal in a BWP, and is less than an active BWP of the communication apparatus 2000 or a CC. The transceiver module 2001 is configured to send the filtered first signal to the network device.

In an optional implementation, the first bandwidth is a minimum filter bandwidth that is in a filter bandwidth supported by the communication apparatus 2000 and that is greater than or equal to a bandwidth occupied by the first subband in the BWP.

In an alternative solution, the first bandwidth is a minimum filter bandwidth greater than or equal to a third bandwidth, and the third bandwidth is a bandwidth occupied by a channel carrying a signal on the first time-frequency resource, or is a bandwidth occupied by the first subband in the CC.

In an optional implementation, that the first bandwidth is a minimum filter bandwidth that is in a filter bandwidth supported by the communication apparatus 2000 and that is greater than or equal to a bandwidth occupied by the first subband in the BWP includes: The first bandwidth is a minimum filter bandwidth that is in the filter bandwidth supported by the communication apparatus 2000 in at least one bandwidth and that is greater than or equal to the bandwidth occupied by the first subband in the BWP. The at least one bandwidth is indicated by the network device.

In an optional implementation, the transceiver module 2001 is further configured to receive third indication information from the network device, where the third indication information indicates the first bandwidth. The processing module 2002 is specifically configured to determine the first bandwidth based on the third indication information.

In an optional implementation, a center frequency of the filter is a center position of the bandwidth occupied by the first subband in the BWP, or is a center position of the active BWP of the communication apparatus 2000.

In an optional implementation, the first signal is sent in a frequency hopping manner, and a time interval between an n^{th} hop of the first signal and an (n+1)^{th} hop of the first signal is T3. The first bandwidth is further determined based on T3 and switching duration T of the terminal device. T is a period of time for the terminal device to adapt to a switched center frequency after the center frequency of the filter is switched from a center frequency of the n^{th} hop to a center frequency of the (n+1)^{th} hop, where n is an integer greater than or equal to 1.

In an optional implementation, when T3 is less than T, bandwidths occupied by the two hops of first signal need to be considered for a bandwidth occupied by the first signal on the first time-frequency resource.

In an optional implementation, the transceiver module 2001 is further configured to receive second indication information from the network device, where the second indication information indicates a first filtering mode in a plurality of filtering modes. The first filtering mode is for triggering the communication apparatus 2000 to determine the first bandwidth.

In an optional implementation, the transceiver module 2001 is further configured to receive configuration information from the network device, where the configuration information includes a time division duplexing configuration configured by the network device for the communication apparatus 2000. The time division duplexing configuration corresponds to a first filtering mode, and the first filtering mode is for triggering the communication apparatus 2000 to determine the first bandwidth.

In an optional implementation, the transceiver module 2001 is further configured to send capability information to the network device, where the capability information indicates at least one of the following information: the filter bandwidth supported by the communication apparatus 2000 or the switching time T of the communication apparatus 2000. T is a period of time for the communication apparatus 2000 to adapt to a switched filter parameter, and the filter parameter includes one or more of the following: the bandwidth, the center frequency, or an analog parameter of the filter.

In some possible implementations, the communication apparatus 2000 can correspondingly implement behavior and a function of the network device in the foregoing method embodiments. For example, the communication apparatus 2000 may be the network device, or may be a component (for example, a chip or a circuit) used in the network device. The transceiver module 2001 may be configured to support communication between the network device and another network entity, for example, support communication between the network device and the terminal device shown in FIG. 7, FIG. 8, FIG. 18, or FIG. 19. The processing module 2002 is configured to control and manage an action of the network device. For example, the processing module 2002 is configured to support the network device in performing all operations other than receiving and sending in FIG. 7, FIG. 8, FIG. 18, or FIG. 19.

In some embodiments, the processing module 2002 is configured to determine first indication information. The transceiver module 2001 is configured to send the first indication information to the terminal device. The first indication information indicates a first time interval, and the first time interval is an interval between an end time point of a first signal and a start time point of a second signal. The first signal and the second signal are sent in a same BWP. A first filter parameter corresponding to the first signal is different from a second filter parameter corresponding to the second signal. The first time interval is related to switching duration of the terminal device, and the switching duration is duration needed for a filter of the terminal device to switch from the first filter parameter to the second filter parameter and for the terminal device to adapt to the second filter parameter.

In an optional implementation, that the first time interval is related to switching duration of the terminal device includes: The first time interval is greater than or equal to the switching duration T, or the first time interval is greater than or equal to a sum T' of the switching duration and first duration.

In an optional implementation, the transceiver module 2001 sends the second signal at least after the first time interval elapses after sending the first signal. The first time interval is greater than or equal to T', and the first duration is processing duration T1 of the first signal.

In an optional implementation, the transceiver module 2001 receives the second signal at least after the first time interval elapses after sending the first signal. The first time interval is greater than or equal to T', and the first duration is a sum of processing duration T1 of the first signal and preparation duration T2 of the second signal.

In an optional implementation, the transceiver module 2001 receives the second signal at least after the first time interval elapses after receiving the first signal. The first time interval is greater than or equal to T', and the first duration is greater than or equal to 0.

In an optional implementation, the first indication information is carried in the first signal.

In some other embodiments, the processing module 2002 is configured to determine a first bandwidth of a filter of the terminal device. The filter is configured to filter a first signal on a first time-frequency resource. The first time-frequency resource belongs to a second time-frequency resource. A time domain resource corresponding to the first time-frequency resource is the same as a time domain resource corresponding to the second time-frequency resource, a frequency domain resource corresponding to the second time-frequency resource includes at least two subbands, and transmission directions of the at least two subbands include an uplink transmission direction and a downlink transmission direction. A frequency domain resource corresponding to the first time-frequency resource is a first subband in the at least two subbands. The first bandwidth is greater than or equal to a bandwidth occupied by the first subband in a BWP, and is less than an active BWP of the terminal device or a CC. The first signal is information that is to be sent or is received by the terminal device. The transceiver module 2001 is configured to send third indication information to the terminal device, where the third indication information indicates the first bandwidth.

In an optional implementation, the first bandwidth is a minimum filter bandwidth that is in a filter bandwidth supported by the terminal device and that is greater than or equal to the bandwidth occupied by the first subband in the BWP.

In an alternative solution, the first bandwidth is a minimum filter bandwidth greater than or equal to a third bandwidth, and the third bandwidth is a bandwidth occupied by a channel carrying a signal on the first time-frequency resource, or is a bandwidth occupied by the first subband in the CC.

In an optional implementation, that the first bandwidth is a minimum filter bandwidth that is in a filter bandwidth supported by the terminal device and that is greater than or equal to the bandwidth occupied by the first subband in the BWP includes: The first bandwidth is a minimum filter bandwidth that is in the filter bandwidth supported by the terminal device in at least one bandwidth and that is greater than or equal to the bandwidth occupied by the first subband in the BWP.

In an optional implementation, the first signal is sent in a frequency hopping manner, and a time interval between an n^{th} hop of the first signal and an (n+1)^{th} hop of the first signal is T3. The first bandwidth is further determined based on T3 and switching duration T of the terminal device, n is an integer greater than or equal to 1.

In an optional implementation, T3 is less than T, and a bandwidth occupied by a channel carrying the first signal is bandwidths occupied by a channel carrying the n^{th} hop of the first signal and a channel carrying the (n+1)^{th} hop of the first signal.

In an optional implementation, the transceiver module 2001 is further configured to send second indication information to the terminal device, where the second indication information indicates a first filtering mode in a plurality of filtering modes. The first filtering mode is for triggering the terminal device to determine the first bandwidth.

In an optional implementation, the transceiver module 2001 is further configured to send configuration information to the terminal device, where the configuration information includes a time division duplexing configuration configured by the communication apparatus 2000 for the terminal device. The time division duplexing configuration corresponds to a first filtering mode, and the first filtering mode is for triggering the terminal device to determine the first bandwidth.

In an optional implementation, the transceiver module 2001 is further configured to receive capability information from the terminal device, where the capability information indicates at least one of the following information: the filter bandwidth supported by the terminal device or the switching duration T of the terminal device. A filter parameter includes one or more of the following: the bandwidth, a center frequency, or an analog parameter of the filter.

It should be understood that in this embodiment of this application, the processing module 2002 may be implemented by a processor or a processor-related circuit component, and the transceiver module 2001 may be implemented by a transceiver or a transceiver-related circuit component.

It should be noted that the transceiver module 2001 may alternatively be configured to support the terminal device in performing a plurality of procedures in the procedures shown in FIG. 7, FIG. 8, FIG. 18, and FIG. 19. The processing module 2002 is configured to support the network device in performing a plurality of procedures in the procedures shown in FIG. 7, FIG. 8, FIG. 18, and FIG. 19. For example, the transceiver module 2001 may support the terminal device in performing the procedures shown in FIG. 7 and FIG. 8, and the processing module 2002 may support the network device in performing the procedures shown in FIG. 7 and FIG. 8.

An embodiment of this application further provides a communication system. Specifically, the communication system includes a network device and a terminal device, or may include more network devices and more terminal devices. For example, the communication system includes a network device and a terminal device that are configured to implement related functions in the embodiment in FIG. 7, FIG. 8, FIG. 18, or FIG. 19. For example, the network device is configured to implement a related function of the network device in the embodiment shown in FIG. 7, and the terminal device is configured to implement a related function of the terminal device in the embodiment shown in FIG. 7. For details, refer to the related descriptions in the foregoing method embodiment. The details are not described herein again. For another example, the network device is configured to implement a related function of the network device in the embodiment shown in FIG. 8, and the terminal device is configured to implement a related function of the terminal device in the embodiment shown in FIG. 8. For details, refer to the related descriptions in the foregoing method embodiment. The details are not described herein again. For another example, the network device is configured to implement a related function of the network device in the embodiment shown in FIG. 18, and the terminal device is configured to implement a related function of the terminal device in the embodiment shown in FIG. 18. For details, refer to the related descriptions in the foregoing method embodiment. The details are not described herein again. For another example, the network device is configured to implement a related function of the network device in the embodiment shown in FIG. 19, and the terminal device is configured to implement a related function of the terminal device in the embodiment shown in FIG. 19. For details, refer to the related descriptions in the foregoing method embodiment. The details are not described herein again. Alternatively, the communication system includes a network device and a terminal device that are configured to implement related functions in a plurality of embodiments in FIG. 7, FIG. 8, FIG. 18, and FIG. 19. For example, the network device is configured to implement related functions of the network device in the embodiments shown in FIG. 7 and FIG. 8, and the terminal device is configured to implement related functions of the terminal device in the embodiments shown in FIG. 7 and FIG. 8. For details, refer to the related descriptions in the foregoing method embodiments. The details are not described herein again.

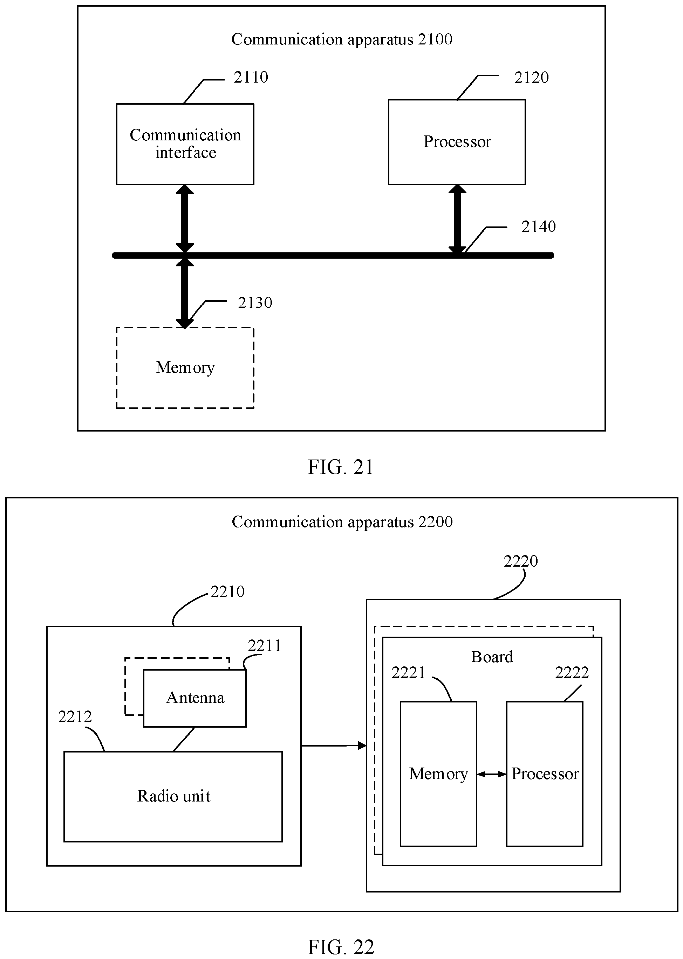

FIG. 21 shows a communication apparatus 2100 according to an embodiment of this application. The communication apparatus 2100 may be a network device, and can implement a function of the network device in the methods provided in embodiments of this application. Alternatively, the communication apparatus 2100 may be a terminal device, and can implement a function of the terminal device in the methods provided in embodiments of this application. Alternatively, the communication apparatus 2100 may be an apparatus that can support the network device or the terminal device to implement a corresponding function in the methods provided in embodiments of this application. The communication apparatus 2100 may be a chip system. In this embodiment of this application, the chip system may include a chip, or may include a chip and another discrete component.

In a hardware implementation, the transceiver module 2001 may be a transceiver, and the transceiver is integrated into the communication apparatus 2100 to form a communication interface 2110.

The communication apparatus 2100 includes at least one processor 2120. The processor 2120 may be a CPU, a microprocessor, an ASIC, or one or more integrated circuits configured to control program execution of the solutions in this application, and is configured to implement or support the communication apparatus 2100 to implement a function of the network device, the terminal, or a positioning management device in the methods provided in embodiments of this application. For details, refer to the detailed descriptions in the method examples. The details are not described herein again.

The communication apparatus 2100 may further include at least one memory 2130, configured to store program instructions and/or data. The memory 2130 is coupled to the processor 2120. The coupling in embodiments of this application may be an indirect coupling or a communication connection between apparatuses, units, or modules in an electrical form, a mechanical form, or another form, and is for information exchange between the apparatuses, the units, or the modules. The processor 2120 may operate in collaboration with the memory 2130. The processor 2120 may execute the program instructions and/or the data stored in the memory 2130, so that the communication apparatus 2100 implements a corresponding method. At least one of the at least one memory may be included in the processor 2120.

The communication apparatus 2100 may further include the communication interface 2110, configured to communicate with another device or a communication network, for example, a RAN, a wireless local area network (wireless local area network, WLAN), or a wired access network, through any transceiver-type apparatus. The communication interface 2110 is configured to communicate with another device through a transmission medium, so that an apparatus in the communication apparatus 2100 can communicate with the another device. For example, when the communication apparatus 2100 is the network device, the another device is the terminal device or a location management function; or when the communication apparatus is the terminal device, the another device is the network device or a location management function. The processor 2120 may receive and send data through the communication interface 2110. The communication interface 2110 may be specifically a transceiver.

A specific connection medium between the communication interface 2110, the processor 2120, and the memory 2130 is not limited in this embodiment of this application. In this embodiment of this application, the memory 2130, the processor 2120, and the communication interface 2110 are connected through a bus 2140 in FIG. 21, the bus is represented by a bold line in FIG. 21, and a manner of connection between other components is merely an example for description, and is not limited thereto. The bus may be classified into an address bus, a data bus, a control bus, and the like. For ease of representation, only one bold line is used for representation in FIG. 21, but this does not mean that there is only one bus or only one type of bus.

In this embodiment of this application, the processor 2120 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the methods disclosed with reference to embodiments of this application may be directly performed by a hardware processor, or may be performed by a combination of hardware in the processor and a software module.

The memory 2130 may be a ROM, another type of static storage device that can store static information and instructions, a RAM, or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction structure or a data structure and that is accessible to a computer, but is not limited thereto. The memory may exist independently, and is connected to the processor through the communication line 2140. The memory may alternatively be integrated with the processor.

The memory 2130 is configured to store computer-executable instructions for executing the solutions of this application, and the processor 2120 controls the execution. The processor 2120 is configured to execute the computer-executable instructions stored in the memory 2130, to implement the communication method provided in the foregoing embodiments of this application.

Optionally, the computer-executable instructions in embodiments of this application may also be referred to as application program code. This is not specifically limited in embodiments of this application.

It should be noted that the communication apparatus in the foregoing embodiment may be the terminal device, may be a circuit, or may be a chip used in the terminal device or another combined device, component, or the like that has a function of the terminal device. When the communication apparatus is the terminal device, the transceiver module may be a transceiver, and may include an antenna, a radio frequency circuit, and the like; and the processing module may be a processor, for example, a CPU. When the communication apparatus is the component that has the function of the terminal device, the transceiver module may be a radio frequency unit, and the processing module may be a processor. When the communication apparatus is a chip system, the communication apparatus may be an FPGA, a dedicated ASIC, a system-on-a-chip (system-on-a-chip, SoC), a CPU, a network processor (network processor, NP), a DSP, a micro controller unit (micro controller unit, MCU), a programmable logic device (programmable logic device, PLD), or another integrated chip. The processing module 2002 may be a processor of the chip system. The transceiver module 2001 or the communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another component) and transmit the code instructions to the processor. The processor may be configured to run the code instructions to perform the methods in the foregoing method embodiments. For another example, the interface circuit may alternatively be a signal transmission interface circuit between the communication processor and the transceiver.

For example, the communication apparatus in the foregoing embodiment may be a chip. The chip includes a logic circuit and an input/output interface, and may further include a memory. The input/output interface may be configured to receive code instructions (where the code instructions are stored in the memory, and may be directly read from the memory, or may be read from the memory through another component) and transmit the code instructions to the logic circuit. The logic circuit may be configured to run the code instructions to perform the methods in the foregoing method embodiments. Alternatively, the input/output interface may be a signal transmission interface circuit between the logic circuit and the transceiver.

FIG. 22 is a simplified schematic diagram of a structure of a communication apparatus. For ease of understanding and illustration, FIG. 22 uses an example in which the communication apparatus is a base station. The base station may be used in the system shown in FIG. 6, may be the network device in FIG. 6, and performs a function of the network device in the foregoing method embodiments.

The communication apparatus 2200 may include a transceiver 2210, a memory 2221, and a processor 2222. The transceiver 2210 may be used by the communication apparatus to perform communication, for example, configured to send or receive the foregoing indication information. The memory 2221 is coupled to the processor 2222, and may be configured to store a program and data that are necessary for implementing functions by the communication apparatus 2200. The processor 2222 is configured to support the communication apparatus 2200 in performing a corresponding function in the foregoing methods. The function may be implemented by invoking the program stored in the memory 2221.

Specifically, the transceiver 2210 may be a wireless transceiver, and may be configured to support the communication apparatus 2200 in receiving and sending signaling and/or data through a radio air interface. The transceiver 2210 may also be referred to as a transceiver unit or a communication unit. The transceiver 2210 may include one or more radio units 2212 and one or more antennas 2211. The radio unit, for example, a remote radio unit (remote radio unit, RRU) or an active antenna unit (active antenna unit, AAU), may be specifically configured to: transmit a radio frequency signal, and perform conversion between the radio frequency signal and a baseband signal. The one or more antennas may be specifically configured to radiate and receive the radio frequency signal. Optionally, the transceiver 2210 may include only the foregoing radio unit. In this case, the communication apparatus 2200 may include the transceiver 2210, the memory 2221, the processor 2222, and the antenna.

The memory 2221 and the processor 2222 may be integrated, or may be independent of each other. As shown in FIG. 22, the memory 2221 and the processor 2222 may be integrated into a control unit 2220 of the communication apparatus 2200. For example, the control unit 2220 may include a baseband unit (baseband unit, BBU) of an LTE base station, and the baseband unit may also be referred to as a digital unit (digital unit, DU). Alternatively, the control unit 2220 may include a distributed unit (distribute unit, DU) and/or a central unit (central unit, CU) in a base station in 5G and a future radio access technology. The control unit 2220 may include one or more antenna panels. A plurality of antenna panels may jointly support a radio access network (for example, an LTE network) of a single access standard, or may separately support radio access networks (for example, an LTE network, a 5G network, and another network) of different access standards. The memory 2221 and the processor 2222 may serve one or more antenna panels. In other words, the memory 2221 and the processor 2222 may be separately disposed on each antenna panel. Alternatively, a plurality of antenna panels may share the same memory 2221 and the same processor 2222. In addition, a necessary circuit may be disposed on each antenna panel. For example, the circuit may be configured to implement coupling between the memory 2221 and the processor 2222. The transceiver 2210, the processor 2222, and the memory 2221 may be connected through a bus (bus) structure and/or another connection medium.

Based on the structure shown in FIG. 22, when the communication apparatus 2200 needs to send data, the processor 2222 may perform baseband processing on the to-be-sent data and output a baseband signal to the radio unit, and the radio unit performs radio frequency processing on the baseband signal and sends a radio frequency signal in a form of an electromagnetic wave through the antenna. When data is sent to the communication apparatus 2200, the radio unit receives a radio frequency signal through the antenna, converts the radio frequency signal into a baseband signal, and outputs the baseband signal to the processor 2222. The processor 2222 converts the baseband signal into data, and processes the data.

Based on the structure shown in FIG. 22, the transceiver 2210 may be configured to perform the foregoing step performed by the transceiver module 2001; and/or the processor 2222 may be configured to invoke instructions in the memory 2221 to perform the foregoing step performed by the processing module 2002.

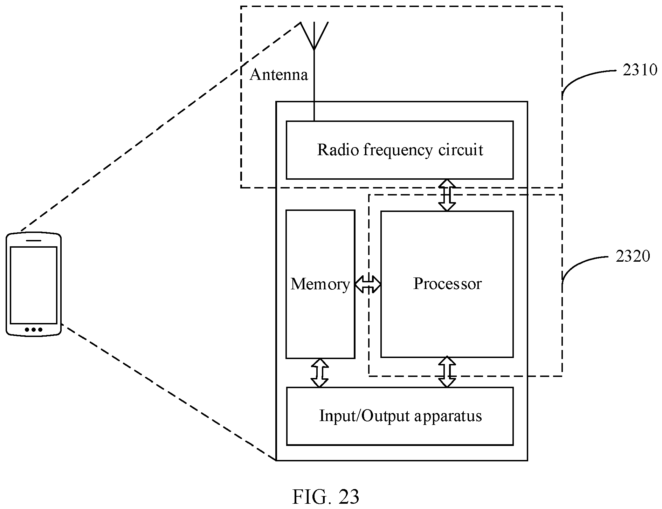

FIG. 23 is a simplified schematic diagram of a structure of a terminal device. For ease of understanding and illustration, FIG. 23 uses an example in which the terminal device is a mobile phone. As shown in FIG. 23, the terminal device includes a processor, a memory, a radio frequency circuit, an antenna, and an input/output apparatus. The processor is mainly configured to: process a communication protocol and communication data, control the on-board unit, execute a software program, process data of the software program, and so on. The memory is mainly configured to store the software program and data. The radio frequency circuit is mainly configured to: perform conversion between a baseband signal and a radio frequency signal, and process the radio frequency signal. The antenna is mainly configured to receive and send the radio frequency signal in a form of an electromagnetic wave. The input/output apparatus, such as a touchscreen, a display, or a keyboard, is mainly configured to: receive data input by a user and output data to the user. It should be noted that some types of devices may have no input/output apparatus.

When needing to send data, the processor performs baseband processing on the to-be-sent data, and outputs a baseband signal to the radio frequency circuit. The radio frequency circuit performs radio frequency processing on the baseband signal and then sends a radio frequency signal to the outside in a form of an electromagnetic wave through the antenna. When data is sent to the device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 23 shows only one memory and one processor. In an actual device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna that has receiving and sending functions and the radio frequency circuit may be considered as a transceiver unit of the apparatus, and the processor having a processing function may be considered as a processing unit of the apparatus. As shown in FIG. 23, the apparatus includes a transceiver unit 2310 and a processing unit 2320. The transceiver unit 2310 may also be referred to as a transceiver, a transceiver apparatus, or the like. The processing unit 2320 may also be referred to as a processor, a processing board, a processing module, a processing apparatus, or the like. Optionally, a component for implementing the receiving function in the transceiver unit 2310 may be considered as a receiving unit, and a component for implementing the sending function in the transceiver unit 2310 may be considered as a sending unit. In other words, the transceiver unit 2310 includes the receiving unit and the sending unit. The transceiver unit 2310 sometimes may also be referred to as a transceiver, a transceiver circuit, or the like. The receiving unit sometimes may also be referred to as a receiver, a receive circuit, or the like. The sending unit sometimes may also be referred to as a transmitter, a transmit circuit, or the like.

It should be understood that the transceiver unit 2310 is configured to perform a sending operation and a receiving operation on a terminal device side in the foregoing method embodiments, and the processing unit 2320 is configured to perform an operation other than the sending and receiving operations of the terminal in the foregoing method embodiments.

When the communication apparatus is a chip-type apparatus or a circuit, the apparatus may include the transceiver unit and the processing unit. The transceiver unit may be an input/output circuit and/or a communication interface. The processing unit is an integrated processor, a microprocessor, or an integrated circuit.

An embodiment of this application further provides a computer-readable storage medium, including instructions. When the instructions are run on a computer, the computer is enabled to perform the method performed by the network device or the terminal device in FIG. 7, FIG. 8, FIG. 18, or FIG. 19. Alternatively, when the instructions are run on a computer, the computer is enabled to perform the methods performed by the network device or the terminal device in the procedures shown in a plurality of figures in FIG. 7, FIG. 8, FIG. 18, and FIG. 19.

An embodiment of this application further provides a computer program product, including instructions. When the instructions are run on a computer, the computer is enabled to perform the method performed by the network device or the terminal device in FIG. 7, FIG. 8, FIG. 18, or FIG. 19. When the instructions are run on a computer, the computer is enabled to perform the methods performed by the network device or the terminal device in the procedures shown in a plurality of figures in FIG. 7, FIG. 8, FIG. 18, and FIG. 19.

An embodiment of this application provides a chip system. The chip system includes a processor, may further include a memory, and is configured to implement functions of the network device and the terminal device in the foregoing methods. The chip system may include a chip, or may include a chip and another discrete component.

All or a part of the methods in embodiments of this application may be implemented by software, hardware, firmware, or any combination thereof. When the software is used to implement the methods, all or a part of the methods may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the spirit and scope of this application. This application is intended to cover these modifications and variations of this application provided that they fall within the scope of the appended claims of this application and their equivalent technologies.

## Claims

1. A communication method, comprising:
receiving first indication information from a network device, wherein the first indication information indicates a first time interval, the first time interval is an interval between an end time point of a first signal and a start time point of a second signal, the first signal and the second signal are sent in a same bandwidth part BWP, the first signal corresponds to a first filter parameter, the second signal corresponds to a second filter parameter, the first filter parameter is different from the second filter parameter, the first time interval is related to switching duration of a terminal device, and the switching duration is duration needed for a filter of the terminal device to switch from the first filter parameter to the second filter parameter and for the terminal device to adapt to the second filter parameter; and
receiving or sending the second signal at least after the first time interval elapses after the first signal.

2. The method according to claim 1, wherein that the first time interval is related to switching duration of a terminal device comprises:
the first time interval is greater than or equal to the switching duration T; or
the first time interval is greater than or equal to a sum T' of the switching duration and first duration.

3. The method according to claim 2, wherein the second signal is received at least after the first time interval elapses after the first signal is received, wherein the first time interval is greater than or equal to T', and the first duration is processing duration T1 of the first signal.

4. The method according to claim 2, wherein the second signal is sent at least after the first time interval elapses after the first signal is received, wherein the first time interval is greater than or equal to T', and the first duration is a sum of processing duration T1 of the first signal and preparation duration T2 of the second signal.

5. The method according to claim 2, wherein the second signal is sent at least after the first time interval elapses after the first signal is sent, wherein the first time interval is greater than or equal to T', and the first duration is greater than or equal to 0.

6. The method according to any one of claims 1 to 3, wherein the first indication information is carried in the first signal.

7. The method according to any one of claims 1 to 6, wherein the method further comprises:
determining a first bandwidth of the filter, wherein the filter is configured to filter a signal on a first time-frequency resource, the first time-frequency resource belongs to a second time-frequency resource, a time domain resource corresponding to the first time-frequency resource is the same as a time domain resource corresponding to the second time-frequency resource, a frequency domain resource corresponding to the second time-frequency resource comprises at least two subbands, a frequency domain resource corresponding to the first time-frequency resource is a first subband in the at least two subbands, and transmission directions of the at least two subbands comprise an uplink transmission direction and a downlink transmission direction, wherein the first bandwidth is greater than or equal to a bandwidth occupied by the first subband in the bandwidth part BWP, and is less than an active BWP of the terminal device or a component carrier CC; and
filtering the first time-frequency resource through the filter.

8. The method according to claim 7, wherein the first bandwidth is a minimum filter bandwidth that is in a filter bandwidth supported by the terminal device and that is greater than or equal to the bandwidth occupied by the first subband in the BWP.

9. The method according to claim 7 or 8, wherein a center frequency of the filter is a center position of the bandwidth occupied by the first subband in the BWP, or is a center position of the active BWP of the terminal device.

10. The method according to any one of claims 7 to 9, wherein the at least two subbands comprise the first subband and a second subband, and the center frequency of the filter is a frequency domain position at which the first subband is adjacent to the second subband.

11. The method according to any one of claims 7 to 10, wherein the method further comprises:
receiving second indication information from the network device, wherein the second indication information indicates a first filtering mode in a plurality of filtering modes, and the first filtering mode is for triggering the terminal device to determine the first bandwidth; or
using configuration information from the network device, wherein the configuration information comprises a time division duplexing configuration configured by the network device for the terminal device, the time division duplexing configuration corresponds to a first filtering mode, and the first filtering mode is for triggering the terminal device to determine the first bandwidth.

12. The method according to any one of claims 7 to 11, wherein the method further comprises: sending capability information to the network device, wherein the capability information indicates at least one of the following information:
the filter bandwidth supported by the terminal device or the switching duration T of the terminal device.

13. A communication method, comprising:
determining first indication information, wherein the first indication information indicates a first time interval, the first time interval is an interval between an end time point of a first signal and a start time point of a second signal, the first signal and the second signal are sent in a same bandwidth part BWP, the first signal corresponds to a first filter parameter, the second signal corresponds to a second filter parameter, the first filter parameter is different from the second filter parameter, the first time interval is related to switching duration of a terminal device, and the switching duration is duration needed for a filter of the terminal device to switch from the first filter parameter to the second filter parameter and for the terminal device to adapt to the second filter parameter; and
sending the first indication information to the terminal device.

14. The method according to claim 13, wherein that the first time interval is related to switching duration of a terminal device comprises:
the first time interval is greater than or equal to the switching duration T; or
the first time interval is greater than or equal to a sum T' of the switching duration and first duration.

15. The method according to claim 14, wherein the second signal is sent after the first signal is sent, wherein the first time interval is greater than or equal to T', and the first duration is processing duration T1 of the first signal.

16. The method according to claim 14, wherein the second signal is received after the first signal is sent, wherein the first time interval is greater than or equal to T', and the first duration is a sum of processing duration T1 of the first signal and preparation duration T2 of the second signal.

17. The method according to claim 14, wherein the second signal is received after the first signal is received, wherein the first time interval is greater than or equal to T', and the first duration is greater than or equal to 0.

18. The method according to any one of claims 13 to 17, wherein the first indication information is carried in the first signal.

19. The method according to any one of claims 13 to 18, wherein the method further comprises:
determining a first bandwidth of the filter, wherein the filter is configured to filter a signal on a first time-frequency resource, the first time-frequency resource belongs to a second time-frequency resource, a time domain resource corresponding to the first time-frequency resource is the same as a time domain resource corresponding to the second time-frequency resource, a frequency domain resource corresponding to the second time-frequency resource comprises at least two subbands, a frequency domain resource corresponding to the first time-frequency resource is a first subband in the at least two subbands, and transmission directions of the at least two subbands comprise an uplink transmission direction and a downlink transmission direction, wherein the first bandwidth is greater than or equal to a bandwidth occupied by the first subband in the bandwidth part BWP, and is less than an active BWP of the terminal device or a component carrier CC; and
sending third indication information to the terminal device, wherein the third indication information indicates the first bandwidth.

20. The method according to claim 19, wherein the first bandwidth is a minimum filter bandwidth that is in a filter bandwidth supported by the terminal device and that is greater than or equal to the bandwidth occupied by the first subband in the BWP.

21. The method according to claim 19 or 20, wherein a center frequency of the filter is a center position of the bandwidth occupied by the first subband in the BWP, or is a center position of the active BWP of the terminal device.

22. The method according to any one of claims 19 to 21, wherein the at least two subbands comprise the first subband and a second subband, and the center frequency of the filter is a frequency domain position at which the first subband is adjacent to the second subband.

23. The method according to any one of claims 19 to 22, wherein the method further comprises:
sending second indication information to the terminal device, wherein the second indication information indicates a first filtering mode in a plurality of filtering modes, and the first filtering mode is for triggering the terminal device to determine the first bandwidth; or
using configuration information from a network device, wherein the configuration information comprises a time division duplexing configuration configured by the network device for the terminal device, the time division duplexing configuration corresponds to a first filtering mode, and the first filtering mode is for triggering the terminal device to determine the first bandwidth.

24. The method according to any one of claims 19 to 23, wherein the method further comprises: receiving capability information from the terminal device, wherein the capability information indicates at least one of the following information:
the filter bandwidth supported by the terminal device or the switching duration T of the terminal device.

25. A communication apparatus, wherein the communication apparatus comprises a processing module and a transceiver module, wherein
the transceiver module is configured to receive first indication information from a network device, wherein the first indication information indicates a first time interval, the first time interval is an interval between an end time point of a first signal and a start time point of a second signal, the first signal and the second signal are sent in a same bandwidth part BWP, the first signal corresponds to a first filter parameter, the second signal corresponds to a second filter parameter, the first filter parameter is different from the second filter parameter, the first time interval is related to switching duration of a terminal device, and the switching duration is duration needed for a filter of the communication apparatus to switch from the first filter parameter to the second filter parameter and for the communication apparatus to adapt to the second filter parameter; and
the processing module is configured to determine to receive or send the second signal at least after the first time interval elapses after the first signal.

26. The communication apparatus according to claim 25, wherein that the first time interval is related to switching duration of a terminal device comprises:
the first time interval is greater than or equal to the switching duration T; or
the first time interval is greater than or equal to a sum T' of the switching duration and first duration.

27. The communication apparatus according to claim 26, wherein the transceiver module is specifically configured to:
receive the second signal at least after the first time interval elapses after the first signal is received, wherein the first time interval is greater than or equal to T', and the first duration is processing duration T1 of the first signal.

28. The communication apparatus according to claim 26, wherein the transceiver module is specifically configured to:
send the second signal at least after the first time interval elapses after the first signal is received, wherein the first time interval is greater than or equal to T', and the first duration is a sum of processing duration T 1 of the first signal and preparation duration T2 of the second signal.

29. The communication apparatus according to claim 26, wherein the transceiver module is specifically configured to:
send the second signal at least after the first time interval elapses after the first signal is sent, wherein the first time interval is greater than or equal to T', and the first duration is greater than or equal to 0.

30. The communication apparatus according to any one of claims 25 to 27, wherein the first indication information is carried in the first signal.

31. The communication apparatus according to any one of claims 25 to 30, wherein
the processing module is further configured to determine a first bandwidth of the filter, and filter a first time-frequency resource through the filter, wherein the filter is configured to filter a signal on the first time-frequency resource, the first time-frequency resource belongs to a second time-frequency resource, a time domain resource corresponding to the first time-frequency resource is the same as a time domain resource corresponding to the second time-frequency resource, a frequency domain resource corresponding to the second time-frequency resource comprises at least two subbands, a frequency domain resource corresponding to the first time-frequency resource is a first subband in the at least two subbands, and transmission directions of the at least two subbands comprise an uplink transmission direction and a downlink transmission direction, wherein the first bandwidth is greater than or equal to a bandwidth occupied by the first subband in the bandwidth part BWP, and is less than an active BWP of the communication apparatus or a component carrier CC.

32. The communication apparatus according to claim 31, wherein the first bandwidth is a minimum filter bandwidth that is in a filter bandwidth supported by the communication apparatus and that is greater than or equal to the bandwidth occupied by the first subband in the BWP.

33. The communication apparatus according to claim 31 or 32, wherein a center frequency of the filter is a center position of the bandwidth occupied by the first subband in the BWP, or is a center position of the active BWP of the communication apparatus.

34. The communication apparatus according to any one of claims 31 to 33, wherein the at least two subbands comprise the first subband and a second subband, and the center frequency of the filter is a frequency domain position at which the first subband is adjacent to the second subband.

35. The communication apparatus according to any one of claims 31 to 34, wherein the transceiver module is further configured to:
receive second indication information from the network device, wherein the second indication information indicates a first filtering mode in a plurality of filtering modes, and the first filtering mode is for triggering the communication apparatus to determine the first bandwidth; or
use configuration information from the network device, wherein the configuration information comprises a time division duplexing configuration configured by the network device for the communication apparatus, the time division duplexing configuration corresponds to a first filtering mode, and the first filtering mode is for triggering the communication apparatus to determine the first bandwidth.

36. The communication apparatus according to any one of claims 31 to 35, wherein the transceiver module is further configured to send capability information to the network device, wherein the capability information indicates at least one of the following information:
the filter bandwidth supported by the communication apparatus or the switching duration T of the communication apparatus.

37. A communication apparatus, wherein the communication apparatus comprises a processing module and a transceiver module, wherein
the processing module is configured to determine first indication information, wherein the first indication information indicates a first time interval, the first time interval is an interval between an end time point of a first signal and a start time point of a second signal, the first signal and the second signal are sent in a same bandwidth part BWP, the first signal corresponds to a first filter parameter, the second signal corresponds to a second filter parameter, the first filter parameter is different from the second filter parameter, the first time interval is related to switching duration of a terminal device, and the switching duration is duration needed for a filter of the terminal device to switch from the first filter parameter to the second filter parameter and for the terminal device to adapt to the second filter parameter; and
the transceiver module is configured to send the first indication information to the terminal device.

38. The communication apparatus according to claim 37, wherein that the first time interval is related to switching duration of a terminal device comprises:
the first time interval is greater than or equal to the switching duration T; or
the first time interval is greater than or equal to a sum T' of the switching duration and first duration.

39. The communication apparatus according to claim 38, wherein the transceiver module is specifically configured to:
send the second signal after the first signal is sent, wherein the first time interval is greater than or equal to T', and the first duration is processing duration T1 of the first signal.

40. The communication apparatus according to claim 38, wherein the transceiver module is specifically configured to:
receive the second signal after the first signal is sent, wherein the first time interval is greater than or equal to T', and the first duration is a sum of processing duration T1 of the first signal and preparation duration T2 of the second signal.

41. The communication apparatus according to claim 38, wherein the transceiver module is specifically configured to:
receive the second signal after the first signal is received, wherein the first time interval is greater than or equal to T', and the first duration is greater than or equal to 0.

42. The communication apparatus according to any one of claims 37 to 41, wherein the first indication information is carried in the first signal.

43. The communication apparatus according to any one of claims 37 to 42, wherein
the processing module is further configured to determine a first bandwidth of the filter, wherein the filter is configured to filter a signal on a first time-frequency resource, the first time-frequency resource belongs to a second time-frequency resource, a time domain resource corresponding to the first time-frequency resource is the same as a time domain resource corresponding to the second time-frequency resource, a frequency domain resource corresponding to the second time-frequency resource comprises at least two subbands, a frequency domain resource corresponding to the first time-frequency resource is a first subband in the at least two subbands, and transmission directions of the at least two subbands comprise an uplink transmission direction and a downlink transmission direction, wherein the first bandwidth is greater than or equal to a bandwidth occupied by the first subband in the bandwidth part BWP, and is less than an active BWP of the terminal device or a component carrier CC; and
the transceiver module is further configured to send third indication information to the terminal device, wherein the third indication information indicates the first bandwidth.

44. The communication apparatus according to claim 43, wherein the first bandwidth is a minimum filter bandwidth that is in a filter bandwidth supported by the terminal device and that is greater than or equal to the bandwidth occupied by the first subband in the BWP.

45. The communication apparatus according to claim 43 or 44, wherein a center frequency of the filter is a center position of the bandwidth occupied by the first subband in the BWP, or is a center position of the active BWP of the terminal device.

46. The communication apparatus according to any one of claims 43 to 45, wherein the at least two subbands comprise the first subband and a second subband, and the center frequency of the filter is a frequency domain position at which the first subband is adjacent to the second subband.

47. The communication apparatus according to any one of claims 43 to 46, wherein the transceiver module is further configured to:
send second indication information to the terminal device, wherein the second indication information indicates a first filtering mode in a plurality of filtering modes, and the first filtering mode is for triggering the terminal device to determine the first bandwidth; or
use configuration information from a network device, wherein the configuration information comprises a time division duplexing configuration configured by the network device for the terminal device, the time division duplexing configuration corresponds to a first filtering mode, and the first filtering mode is for triggering the terminal device to determine the first bandwidth.

48. The communication apparatus according to any one of claims 43 to 47, wherein the transceiver module is further configured to receive capability information from the terminal device, wherein the capability information indicates at least one of the following information:
the filter bandwidth supported by the terminal device or the switching duration T of the terminal device.

49. A communication apparatus, wherein the communication apparatus comprises a processor, a communication interface, and a memory; and the processor is coupled to the communication interface, and is configured to invoke computer instructions in the memory, to enable the communication apparatus to perform the method according to any one of claims 1 to 12.

50. A communication apparatus, wherein the communication apparatus comprises a processor, a communication interface, and a memory; and the processor is coupled to the communication interface, and is configured to invoke computer instructions in the memory, to enable the communication apparatus to perform the method according to any one of claims 13 to 24.

51. A computer-readable storage medium, wherein the computer-readable storage medium stores computer instructions; and when the computer instructions are executed, a computer is enabled to perform the method according to any one of claims 1 to 12, or is enabled to perform the method according to any one of claims 13 to 24.
